# EUROPÄISCHE PATENTSCHRIFT

(11) **EP 1 714 012 B1**
(45) Veröffentlichungstag und Bekanntmachung des Hinweises auf die Patenterteilung: **26.03.2008**
(21) Anmeldenummer: 05761335.8
(22) Anmeldetag: 10.02.2005
(51) Int. Cl.: F01N 9/00, F01N 11/00, F01N 3/021, F01N 3/023, G01N 27/02

(54) **VORRICHTUNG ZUR FESTSTELLUNG DES ZUSTANDS EINES RUSSPARTIKELFILTERS**
DEVICE FOR DETERMINATION OF THE STATE OF A SOOT PARTICLE FILTER
DISPOSITIF DE DETECTION DE L'ETAT D'UN FILTRE A PARTICULES

(30) Priorität: 12.02.2004 DE 102004007038; 12.02.2004 DE 102004007039; 12.02.2004 DE 102004007040; 12.02.2004 DE 102004007041
(43) Veröffentlichungstag der Anmeldung: 25.10.2006
(73) Patentinhaber: Daimler AG, 70327 Stuttgart (DE)
(72) Erfinder: BIRKHOFER, Thomas, 88090 Immenstaad (DE); KNEZEVIC, Aleksandar, 88045 Friedrichshafen (DE); MÜLLER, Ralf, 88693 Deggenhausertal (DE); PLOG, Carsten, 88677 Markdorf (DE)
(86) Internationale Anmeldenummer: PCT/EP2005/001339
(87) Internationale Veröffentlichungsnummer: WO 2005/093233

(56) Entgegenhaltungen:
- WO-A-93/08382
- US-A- 5 157 340
- PATENT ABSTRACTS OF JAPAN Bd. 009, Nr. 062 (P-342), 19. März 1985 (1985-03-19) & JP 59 196453 A (NIPPON DENSO KK), 7. November 1984 (1984-11-07)

## Beschreibung

Die Erfindung betrifft eine Vorrichtung zur Feststellung des Zustands eines Rußpartikelfilters einer Brennkraftmaschine, mit einer als Rußsensor zur Erfassung einer Rußablagerung ausgebildeten Messanordnung nach den Oberbegriffen der Ansprüche 1 und 4.

Aus der WO 93/08382 A1 ist ein Rußsensor zur Erfassung einer Rußablagerung eines Rußpartikelfilters bekannt, der zwei voneinander beabstandete Elektroden aufweist, welche sich in den Partikelfilter hinein erstrecken. Mittels einer Messanordnung kann ein elektrischer Widerstand zwischen den Elektroden als Maß für eine Menge der Rußablagerung ermittelt werden. Typischerweise ist jedoch bei hoher und bei niedriger Rußbeladung eine vergleichsweise geringe Empfindlichkeit vorhanden, in einem Übergangsbereich hingegen eine sehr viel größere Empfindlichkeit. Aus diesem Grund kann es schwierig sein, das resultierende Mess-Signal zu interpretieren.

Aus der US 4,656,832 ist es bekannt, zur Ermittlung der Rußbeladung eines Partikelfilters eine Elektrodenanordnung auf einem flächigen nichtleitenden Substrat aufzubringen und die Gesamtanordnung in den Abgasweg, gegebenenfalls auch ins Innere eines Partikelfilters einzubringen. Auf dem Substrat abgelagerte Rußpartikel vermindern den zwischen den Elektroden messbaren elektrischen Widerstand, woraus die Rußpartikelablagerung auf dem Substrat ermittelt und daraus der Zeitpunkt für eine Partikelfilterregeneration abgeleitet wird.

Die Erfassung der Rußbeladung auf einem flächigen Referenzbereich ermöglicht es jedoch nicht, die Detektierung des Beladungszustandes des Partikelfilters mit der gewünschten Genauigkeit vorzunehmen und den Partikelfilter optimal zu betreiben.

Aus der WO 93/05388 ist ein Rußsensor mit sich jeweils in einen Rußfilterkörper erstreckender Sendeantenne und Empfangsantenne bekannt. Erfasste Übertragungsverluste des durch den Rußfilterkörper hindurchwandernden Sendesignals werden als Maß für die Rußbeladung genommen. Ein derartiger Rußsensor ist jedoch sehr aufwendig und kostenintensiv, zumal es sich beim Sendesignal um ein Mikrowellensignal handelt.

Aus der DE 19933988 A1 und der EP 587146 sind Vorrichtungen zur Bestimmung der Rußbeladung eines Rußpartikelfilters bekannt, bei denen die Rußbeladung aus der Druckdifferenz zwischen Eingangsseite und Ausgangsseite des Partikelfilters abgeleitet wird. Da der Differentialdruck jedoch nicht nur vom Beladungszustand des Partikelfilters, sondern auch von der Aschebeladung und Gasströmung durch den Filter abhängt, ist die Messgenauigkeit bisher unbefriedigend.

In der EP 1106996 A2 ist ein Rußsensor beschrieben, bei dem in definierten zeitlichen Abständen ein Substrat, das dem rußhaltigen Gas ausgesetzt ist bis zur Zündtemperatur des Rußes aufgeheizt wird. Die dann freigesetzte und gemessene Wärmemenge dient als Maß für die Rußbeladung. Weiterhin ist aus der DE 3525755 C1 ein optisches Messverfahren bekannt, das aufgrund der durch Ruß verursachten Trübung des Abgases und der damit veränderten optischen Wegstrecke ein rußabhängiges Signal liefert. Diese beiden Messverfahren eignen sich nicht für die direkte Beladungserkennung von Rußpartikelfiltern.

Der Erfindung liegt die Aufgabe zugrunde, eine für Kraftfahrzeuge geeignete Vorrichtung anzugeben, welche eine verbesserte Erfassung eines Zustands, insbesondere eines Rußbeladungszustands eines Rußpartikelfilters ermöglicht.

Diese Aufgabe wird erfindungsgemäß durch eine Vorrichtung mit den Merkmalen des Anspruchs 1 sowie durch eine Vorrichtung mit den Merkmalen des Anspruchs 4 gelöst.

Durch die in den Unteransprüchen aufgeführten Maßnahmen sind vorteilhafte Ausgestaltungen der in den Ansprüchen 1 und 4 angegebenen Vorrichtungen möglich.

Mit den erfindungsgemäßen Vorrichtungen können Rußablagerungen im Partikelfilter und daher die Beladung des Partikelfilters in einem dreidimensionalen zusammenhängenden Volumenteilbereich des Partikelfilterkörpers erfasst werden. Dabei bildet dieser Volumenteilbereich selbst einen Teil des Bauelements, dessen elektrische oder magnetische Kenngröße oder Kenngrößen von den zugehörigen Messmitteln erfasst werden können. Das von der Leiterstruktur erregte Feld kann dabei elektrischer oder magnetischer Natur sein. Die Messmittel sind auch in der Lage, aus der erfassten Kenngröße die Menge der Rußablagerungen abzuleiten.

Erfindungsgemäß ist es vorgesehen, dass von den Messmitteln eine mit der elektrischen Impedanz verknüpfte Kenngröße des Bauelements erfassbar ist.

In einer weiteren oder alternativen Ausführungsform der Erfindung ist eine zweite als Rußsensor zur Erfassung einer Rußablagerung wirksame elektrische Messanordnung vorgesehen, die bezüglich der Strömungsrichtung durch den Rußpartikelfilter hinter dem Rußpartikelfilter angeordnet ist.

Da die Rußablagerung im Volumenteilbereich das von der Leiterstruktur erregte elektrische oder magnetische Feld und damit die Kenngröße des Bauelements beeinflusst, ist eine besonders zuverlässige und von den jeweiligen Strömungsverhältnissen weitgehend ungestörte Ermittlung der Beladung ermöglicht. Es ist somit möglich, eine Partikelfilterregeneration auszulösen, wenn die Rußbeladung des Partikelfilters in dem Volumenteilbereich einen vorgebbaren oberen Grenzwert überschritten hat. Die Erfassung der Partikelfilterbeladung in einem volumenmäßig ausgedehnten Teilbereich des Partikelfilterkörpers ermöglicht einerseits eine differenziertere Bewertung des Beladungszustandes im Vergleich zu einer integralen Beladungsermittlung des gesamten Filterkörpers. Andererseits kann ein maßgebender Teil des Partikelfilters erfasst werden. Dies ermöglicht eine genaue Bewertung des Beladungszustandes und somit die Bestimmung eines optimalen Zeitpunkts zur Auslösung einer Partikelfilterregeneration durch Rußabbrand. Dadurch können sowohl unnötige als auch verspätete Regenerationen sicher vermieden werden. Unter der Beladung des Partikelfilterkörpers wird dabei die volumenbezogene Ablagerung fester Bestandteile wie Ruß oder Asche in seinem Inneren verstanden. Vorzugsweise wird die Beladung in Gramm je Liter Filtervolumen angegeben. Der für die Auslösung der Regeneration maßgebende Grenzwert für die Rußbeladung kann hierbei abhängig vom Ort der Beladungsmessung im Partikelfilterkörper, der vorhandenen Aschebeladung, von der maximal tolerierbaren Wärmefreisetzung beim Rußabbrand während der Regeneration oder abhängig von anderen, gegebenenfalls motorischen Betriebsgrößen festlegbar sein. Als Rußpartikelfilter kommen hauptsächlich poröse Formkörper oder mit Kanälen mit porösen Wänden durchzogene monolithische Formkörper in Betracht.

In Ausgestaltung der Erfindung ist die Rußablagerung in voneinander verschiedenen Volumenteilbereichen des Rußpartikelfilters erfassbar. Dabei sind vorzugsweise für die jeweiligen Volumenteilbereiche separate, als Rußsensor wirksame Messanordnungen vorgesehen. Vorzugsweise liegen die Volumenteilbereiche in Richtung der Abgasströmung versetzt zueinander. Da die Beladung des Partikelfilters im wesentlichen eine Abhängigkeit von der Abgasströmungsrichtung besitzt, d.h. einen axialen Gradienten aufweist, kann somit der örtliche bzw. axiale Verlauf der Beladung im Partikelfilter ermittelt werden. Dadurch kann der Beladungszustand des Partikelfilters genauer ermittelt werden.

Der Vorteil der erfindungsgemäßen Vorrichtung besteht insbesondere darin, dass in einer Grundausführung lediglich zwei robuste und störungsunanfällige Messelektroden benötigt werden, wobei die Messung der Impedanz zwischen diesen Messelektroden als einfaches und kostengünstiges Verfahren ausgebildet werden kann, das zudem störungsunanfällig ist. Der Rußfilterkörper bzw. ein Volumenteilbereich ist bei einer Ausführung selbst der mit diesen Messelektroden versehene Sensor. In einer besonders vorteilhaften Ausführungsvariante kann ein entsprechend ausgebildeter einfacher Sensor dem Rußfilterkörper nachgeordnet werden. Das elektrische Sensorsignal ist ein direktes Maß für die Rußbeladung und damit ein Maß für den Partikelfilterzustand.

Die Messmittel sind in einer bevorzugten Ausführungsform zur Messung des ohmschen Widerstands und/oder der Kapazität und/oder der Induktivität ausgebildet. Weiterhin können sie auch in vorteilhafter Weise den Betrag und die Phase der elektrischen Impedanz messen. Zur Impedanzmessung dient zweckmäßigerweise ein Wechselstrom mit einer Frequenz im kHzbis MHz-Bereich.

Besonders zweckmäßig haben sich auch Schaltmittel zur automatischen Einleitung der Filterregenerierung bei Erreichen eines vorgebbaren Auslösemesswerts erwiesen. Diese oder andere Schaltmittel können auch zur automatischen Beendigung der Filterregenerierung bei Erreichen eines vorgebbaren Grenzmesswerts dienen. Hierdurch kann in einfacher Weise eine vollautomatische Filterregenerierung durchgeführt werden.

Da die Messwerte, also die elektrischen Kenngrößen auch von der Temperatur des Bauelements bzw. des Rußpartikelfilters abhängen, sind in vorteilhafter Weise Temperaturmessmittel zur Erfassung der Filtertemperatur und zur Temperaturkompensation des jeweiligen Messsignals vorgesehen. Als Temperaturmessmittel ist vorzugsweise wenigstens ein Temperatursensor vorgesehen, der zweckmäßigerweise an oder in der Leiterstruktur bzw. wenigstens einer der vorhandenen Messelektroden integriert ist. Hierzu ist er vorzugsweise als aufgedruckte temperaturabhängige Struktur, insbesondere als Dickschichtmetallwiderstand, ausgebildet. Eine weitere vorteilhafte Ausgestaltung besteht darin, dass zur Bildung des Temperatursensors ein Teil der Leiterstruktur als temperaturabhängige ausgebildet ist.

In einer vorteilhaften Ausgestaltung der Erfindung eine Messanordnung vorgesehen, welche eine spulenförmige Leiterstruktur umfasst. Vorzugsweise umgibt diese zumindest einen Volumenteilbereich des Partikelfilters. Somit wird ein Bauelement gebildet, dessen Induktivität ein Maß für die Russablagerung ist. Es ist daher vorgesehen, dass von der Messanordnung eine Größe erfassbar ist, die mit der Permeabilitätszahl der im Volumenteilbereich vorhandenen Materie und/oder mit der Induktivität der spulenförmigen Leiterstruktur korreliert. Hierbei ist unter der Permeabilitätszahl insbesondere die üblicherweise mit µᵣ bezeichnete relative magnetische Permeabilität zu verstehen.

Vorzugsweise ist die Leiterstruktur als zylindrische Drahtspule mit einer Vielzahl von Windungen ausgeführt, die zumindest um einen Teilabschnitt des Partikelfilters gewickelt ist oder im Inneren des als Formkörper ausgebildeten Partikelfilters angeordnet ist. Da die Permeabilitätszahl von der Art der Materie abhängt, die in dem von der Leiterstruktur umgebenen Volumenbereich vorhandenen ist, kann über eine mit der Permeabilitätszahl korrelierende Größe, welche mittels der Leiterstruktur erfasst wird, der Beladungszustand, d.h. die Beladung des Partikelfilters zuverlässig ermittelt werden. Dadurch können sowohl unnötige als auch verspätete Regenerationen sicher vermieden werden.

Parallel oder alternativ ist von der Messanordnung die Induktivität der Leiterstruktur oder eine mit der Induktivität der Leiterstruktur korrelierende Größe erfassbar. Der von der Leiterstruktur umgebene Volumenbereich wirkt als Spulenkern bezüglich der Leiterstruktur. Beim Betrieb der Messanordnung ist Leiterstruktur von einem elektrischen Strom durchflossen, der ein entsprechendes Magnetfeld erregt. Die vom Magnetfeld verursachte Induktion ist über die Permeabilitätszahl der vom Magnetfeld durchdrungenen Materie mit der Magnetfeldstärke verknüpft. Da die Induktivität der Leiterstruktur jedoch mit der Induktion verknüpft ist, kann mit Erfassung der Induktivität der Leiterstruktur bzw. einer mit dieser korrelierenden Größe auch die Beladung in dem maßgebenden Volumenbereich des Partikelfilters ermittelt werden.

In weiterer Ausgestaltung der Erfindung ist die Leiterstruktur wenigstens teilweise im Inneren des Partikelfilters angeordnet. Da eine ausreichende Empfindlichkeit der Messanordnung anzustreben ist, ist es aufgrund des Messeffekts vorteilhaft, dass der Kern der spulenförmigen Leiterstruktur möglichst vollständig vom Material des Partikelfilters ausgefüllt ist. Es ist deshalb günstig, die Leiterstruktur völlig im Inneren des Partikelfilters anzuordnen. Andererseits kann es z.B. aus praktischen Gründen vorteilhaft sein, wenn ein Teil der Leiterstruktur außerhalb des Partikelfilterkörpers angeordnet ist.

Ebenfalls vorteilhaft ist es, gemäß einer weiteren Ausgestaltung der Erfindung die spulenförmige Leiterstruktur außerhalb des Partikelfilters anzuordnen und den Partikelfilter z.B. abschnittsweise mit der Leiterstruktur zu umwickeln.

In weiterer Ausgestalltung der Erfindung ist die spulenförmige Leiterstruktur so angeordnet, dass ihre Längsachse annähernd parallel zu einer der Hauptachsen des zylinderförmigen Partikelfilters orientiert ist. Vorteilhaft ist es, die spulenförmige Leiterstruktur so anzuordnen, dass ihre Längsachse parallel zur Längsachse des Partikelfilters orientiert ist, wodurch sich ein einfacher Aufbau ergibt.

In weiterer Ausgestaltung der Erfindung umfasst die Messanordnung eine zweite Leiterstruktur, wobei die spulenförmige Leiterstruktur mit der zweiten Leiterstruktur in einer Wirkungsverbindung steht und die zweite Leiterstruktur eine von der Russablagerung bzw. dem Beladungszustand des Partikelfilters beeinflussbare elektrische Kenngröße aufweist, die von der Messanordnung erfassbar ist. Auf diese Weise können zwei verschiedene Messsignale erhalten werden, was die Zuverlässigkeit verbessert. Andererseits ist es vorteilhaft, die beiden Leiterstrukturen so auszuführen, dass sie in der Art einer Rückkopplung miteinander wechselwirken, so dass die Empfindlichkeit der Messanordnung erhöht ist. Die Wirkungsverbindung der beiden Leiterstrukturen kann dabei über eine elektrisch leitende Verbindung oder über eine drahtlose Kopplung erfolgen.

Die beiden Leiterstrukturen sind vorzugsweise an unterschiedlichen Stellen angeordnet. Somit ist es möglich, die Beladung des Partikelfilters mit Ruß und/oder Asche in wenigstens zwei unterschiedlichen Volumenteilbereichen des Partikelfilters und damit ortsaufgelöst zu ermitteln. Dies ermöglicht eine genaue Bewertung des Beladungszustandes und somit die Bestimmung eines optimalen Zeitpunkts zur Auslösung einer Partikelfilterregeneration beispielsweise durch Rußabbrand. Dadurch können sowohl unnötige als auch verspätete Regenerationen sicher vermieden werden.

Es kann vorteilhaft sein, wenn die von der Messanordnung erfassbare elektrische Kenngröße der zweiten Leiterstruktur eine kapazitive oder eine induktive elektrische Kenngröße ist. Vorteilhaft ist es insbesondere, die spulenförmige Leiterstruktur und die zweite Leiterstruktur so auszubilden, dass zusammengenommen eine resonante Struktur erhalten wird, was die Empfindlichkeit erhöht. Vorzugsweise ist die zweite Leiterstruktur hierzu als Kondensator ausgebildet.

In weiterer Ausgestaltung der Erfindung ist die zweite Leiterstruktur als zweite spulenförmige Leiterstruktur ausgebildet und von der Messanordnung ist eine Größe erfassbar, die mit der zwischen den Leiterstrukturen wirksamen Gegeninduktivität korreliert. Besonders vorteilhaft ist es, die Leiterstrukturen als gekoppelte Spulen auszuführen. Es kann sowohl die Gegeninduktivität der ersten zur zweiten Leiterstruktur, als auch die umgekehrt vorhandene Gegeninduktivität erfassbar sein. Dabei kann die erste oder die zweite Leiterstruktur auch außerhalb des Partikelfilters angeordnet sein, so dass von ihr kein Teil des Partikelfilters umgeben ist. Die jeweils andere Leiterstruktur umgibt dagegen wenigstens einen Teilvolumenbereich des Partikelfilters. Das Magnetfeld der außerhalb des Partikelfilters erregten vorzugsweise als Spule ausgeführten Leiterstruktur ist somit von der Messanordnung festlegbar. Der Fluss der damit verknüpften Induktion durch das von der anderen Leiterstruktur umgebene Partikelfilterteilvolumen ist jedoch von der dort vorhandenen Beladung abhängig. Somit kann über die Erfassung der Gegeninduktivität bzw. einer mit ihr korrelierenden Größe die Partikelfilterbeladung zuverlässig ermittelt werden.

In weiterer Ausgestaltung der Erfindung ist die spulenförmige Leiterstruktur in Abgasströmungsrichtung versetzt zur zweiten Leiterstruktur angeordnet. Dies ermöglicht eine in axialer Richtung aufgelöste Bestimmung der Rußbeladung des Partikelfilters. Da die Beladung des Partikelfilters im wesentlichen eine Abhängigkeit von der Abgasströmungsrichtung besitzt, d.h. einen axialen Gradienten aufweist, kann somit der axiale Verlauf der Beladung im Partikelfilter ermittelt werden. Dies ermöglicht eine besonders genaue Ermittlung des Beladungszustands des Partikelfilters. Der Volumenbereich, in welchem jeweils die Beladung erfasst wird, ergibt sich durch die Geometrie der spulenförmigen Leiterstruktur, im Falle einer kreiszylindrischen Spule insbesondere durch deren Durchmesser und Länge. Durch die Anzahl der Windungen bei einer spulenförmigen Leiterstruktur kann die Induktivität der spulenförmigen Leiterstruktur wesentlich mitbestimmt werden.

In weiterer Ausgestaltung der Erfindung ist eine Messanordnung vorgesehen, bei welcher die Leiterstruktur ein Elektrodenpaar mit einer ersten Elektrode und einer beabstandet zur ersten Elektrode angeordneten zweiten Elektrode umfasst. Die Elektroden des Elektrodenpaars sind dabei so angeordnet, dass zwischen ihnen wenigstens ein Teilvolumenbereich des Partikelfilters liegt. Vo den Messmitteln ist vorzugsweise die zwischen der ersten Elektrode und der zweiten Elektrode wirksame elektrische Impedanz oder eine damit verknüpfte Kenngröße erfassbar. Als mit der vorzugsweise als komplex anzusehenden Impedanz verknüpfte Kenngröße kommen in erster Linie der Betrag der Impedanz sowie ihr Realteil und Imaginärteil sowie ihr Phasenwinkel in Betracht.

Da die Impedanz von der Dielektrizitätszahl der im maßgeblichen Teilvolumenbereich vorhandenen Materie abhängig ist und Ruß als elektrisch leitfähiges Material eine um ein Vielfaches höhere Dielektrizitätszahl als ein Isolator aufweist, wird die zwischen den Elektroden wirksame Impedanz von dort vorhandenem Ruß stark beeinflusst. Somit kann insbesondere bei einem aus elektrisch isolierendem Material wie Keramik ausgebildeten Partikelfilterkörper über die Erfassung der zwischen den Elektroden des Elektrodenpaars wirksamen Impedanz der Beladungszustand bzw. die Rußbeladung des Partikelfilters zuverlässig ermittelt werden. Dadurch können sowohl unnötige als auch verspätete Regenerationen sicher vermieden werden.

In weiterer Ausgestaltung der Erfindung sind die erste Elektrode und die zweite Elektrode flächig ausgebildet und als Platten eines Plattenkondensators einander gegenüberliegend angeordnet. Zur Erfassung des Beladungszustands, insbesondere der Rußbeladung des Partikelfilters wird vorzugsweise die elektrische Kapazität der Anordnung aus Kondensatorplatten und dazwischen liegendem Partikelfiltervolumen ausgewertet. Diese ist abhängig von Art und Menge des dort vorhandenen Materials. Durch die erfindungsgemäße Messanordnung bildet der Partikelfilter selbst einen mit Elektroden versehenen Sensor zur Erfassung des Beladungszustands des Partikelfilters. Durch die Messanordnung kann zumindest die Rußbeladung im zwischen den Elektroden liegenden Partikelfiltervolumenbereich aus der Kapazität ermittelt werden.

In weiterer Ausgestaltung der Erfindung sind die erste Elektrode und/oder die zweite Elektrode auf der äußeren Oberfläche des Partikelfilters oder mit geringem Abstand zur äußeren Oberfläche des Partikelfilters angeordnet. Je nach Form des Partikelfilters können die Elektroden eine gekrümmte Fläche aufweisen, um beispielsweise der Oberflächenkontur eines runden oder ovalen Partikelfilters folgen zu können. Vorzugsweise sind die Elektroden einander diametral gegenüberliegend angeordnet und auf der äußeren Oberfläche des Partikelfilters direkt aufgebracht.

In weiterer Ausgestaltung der Erfindung umfasst die Messanordnung wenigstens zwei Elektrodenpaare. Somit kann die Beladung des Partikelfilters mit Ruß and/oder Asche in wenigstens zwei vorzugsweise unterschiedlichen Volumenteilbereichen des Partikelfilters und damit ortsaufgelöst ermittelt werden. Dies ermöglicht eine genaue Bewertung des Beladungszustandes und somit die Bestimmung eines optimalen Zeitpunkts zur Auslösung einer Partikelfilterregeneration durch Rußabbrand. Dadurch können sowohl unnötige als auch verspätete Regenerationen sicher vermieden werden.

In weiterer Ausgestaltung der Erfindung ist das erste Elektrodenpaar in Abgasströmung versetzt zum zweiten Elektrodenpaar angeordnet. Dies ermöglicht eine in axialer Richtung aufgelöste Bestimmung der Rußbeladung des Partikelfilters. Da die Beladung des Partikelfilters im wesentlichen eine Abhängigkeit von der Abgasströmungsrichtung besitzt, d.h. einen axialen Gradienten aufweist, kann somit der axiale Verlauf der Beladung im Partikelfilter ermittelt werden. Dies ermöglicht eine besonders genaue Ermittlung des Beladungszustands des Partikelfilters. Der Volumenbereich, in welchem jeweils die Rußbeladung erfasst wird, ergibt sich durch die Geometrie der Elektroden des Elektrodenpaars, d.h. durch die Fläche der jeweiligen Elektroden sowie durch deren Abstand, d.h. den Durchmesser bzw. die Querabmessungen des Partikelfilters an der jeweiligen Stelle.

Bei einer bevorzugten, Rußfilterkörper integrierten Ausführung ist das wenigstens eine Elektrodenpaar in Form von Drähten, Plättchen, aufgetragenen Flächen oder in Dickschichttechnik direkt auf oder im Rußfilterkörper angeordnet. Bei der im Rußfilterkörper integrierten Ausführung kann ein Elektrodenpaar in oder an unterschiedlichen Kanälen durch den Rußfilterkörper oder an dessen Außenseite angeordnet sein, insbesondere an den Längsaußenseiten und/oder Stirnflächen.

Es können in weiteren zweckmäßigen Ausgestaltungen auch mehrere Elektrodenpaare in axialer und/oder radialer Richtung nebeneinander angeordnet sein, beispielsweise auch in einer spiralförmigen Anordnung. In Verbindung mit Messmitteln dieser mehreren Elektrodenpaare kann in vorteilhafter Weise eine Ortsauflösung der Rußbeladung des Rußfilterkörpers erreicht werden.

Ist eine zweite als Rußsensor zur Erfassung einer Rußablagerung wirksame elektrische Messanordnung vorgesehen, die bezüglich der Strömungsrichtung durch den Rußpartikelfilter hinter dem Rußpartikelfilter angeordnet ist, so weist diese Messanordnung zweckmäßigerweise ebenfalls eine einem elektrischen Bauelement zugeordnete Leiterstruktur auf, so dass die elektrische Kenngröße oder Kenngrößen des Bauelements von Rußablagerungen beeinflusst werden, was durch entsprechende Messmittel detektiert wird. Im Falle eines separaten Rußfiltersensors erfolgt eine entsprechende Anordnung der Leiterstruktur vorzugsweise auf einem Substrat.

Bei dem vom Rußfilterkörper separat angeordneten Sensor kann das mit der Leiterstruktur, vorzugsweise einem Elektrodenpaar versehene Substrat bezüglich der Strömungsrichtung durch den Rußpartikelfilter hinter dem Rußfilterkörper oder an dessen Rückseite angeordnet sein. Das Elektrodenpaar kann dabei in Form einer Interdigitalelektrodenstruktur auf dem als Keramiksubstrat ausgebildeten Substrat angeordnet sein. Alternativ hierzu kann der Temperatursensor auch durch ein Dielektrikum getrennt unter einer Messelektrode oder an der Rückseite des Substrats angeordnet sein.

Nach der Erfindung kann somit vorgesehen sein, dass dem als Formkörper ausgebildeten Partikelfilters eine Messanordnung zugeordnet ist, welche eine spulenförmige Leiterstruktur umfasst, die zumindest einen Volumenteilbereich des Partikelfilters umgibt. Dadurch ist ein elektrisches Bauelement gebildet, und es wird eine Größe erfasst, die mit der Permeabilitätszahl der im Volumenteilbereich vorhandenen Materie und/oder mit der Induktivität der spulenförmigen Leiterstruktur korreliert.

Ebenso kann zur Ermittlung des Beladungszustands eine Messanordnung zugeordnet sein, die eine erste Elektrode und eine zweite Elektrode umfasst, und es wird die zwischen der ersten Elektrode und der zweiten Elektrode wirksame elektrische Impedanz oder eine damit verknüpfte elektrische Kenngröße erfasst.

Die Gestalt des von der jeweiligen Messanordnung erfassten Volumenbereichs wird dabei im Wesentlichen von der Geometrie der Leiterstruktur bestimmt.

Aus der erfassten jeweiligen Größe wird wiederum die Beladung des Partikelfilters ermittelt. Vorzugsweise erfolgt dies anhand einer vorab ermittelten Kennlinie für die Abhängigkeit des Messsignals von der Rußbeladung. Dabei können auch Sekundäreinflüsse wie beispielsweise Temperaturabhängigkeiten in Form von Kennfeldern berücksichtigt werden.

Ist die Leiterstruktur als zylindrische Spule ausgebildet, so wird vorzugsweise deren Induktivität von geeigneten Messmitteln erfasst. Da die Induktivität von der Art des als Spulenkern wirksamen Materials abhängt, kann über die materialabhängige Permeabilitätszahl die Beladung im maßgebenden Volumenbereich zuverlässig ermittelt werden.

Sind eine erste Elektrode und/oder eine zweite Elektrode auf der äußeren Oberfläche des Partikelfilters oder mit geringem Abstand zur äußeren Oberfläche des Partikelfilters angeordnet, so wird vorzugsweise die elektrische Kapazität der aus erster Elektrode, zweiter Elektrode und zwischen den Elektroden angeordnetem Partikelfiltervolumenbereich gebildeten Anordnung, welche ein elektrisches Bauelement darstellt, ermittelt und aus der Kapazität wird die Rußbeladung des Partikelfilters ermittelt. Somit wird die Rußbeladung zumindest in einem Ausschnitt eines etwa scheibenförmigen Volumenteilbereichs eines zylindrischen Partikelfilters ermittelt.

Wenn für die aus der erfassten Kenngröße abgeleitete Rußbeladung eine Überschreitung eines vorgebbaren oberen Grenzwertes festgestellt wird, so wird die Regeneration des Partikelfilters ausgelöst. Diese Vorgehensweise ermöglicht die Ermittlung der Partikelfilterbeladung in einem volumenmäßig ausgedehnten Teilbereich des Partikelfilterkörpers und somit einerseits eine differenzierte Bewertung des Beladungszustandes. Andererseits kann ein maßgebender Teil des Partikelfilters erfasst werden. Je nach Anordnung und Orientierung kann die Beladung in einem nahezu beliebigen Bereich des Partikelfilters ermittelt werden. Dies ermöglicht die Bestimmung eines optimalen Zeitpunkts zur Auslösung einer Partikelfilterregeneration beispielsweise durch Rußabbrand. Dadurch können sowohl unnötige als auch verspätete Regenerationen sicher vermieden werden. Der für die Auslösung der Regeneration maßgebende Grenzwert für die Rußbeladung kann hierbei abhängig vom Anbringungsort der Leiterstruktur, der vorhandenen Aschebeladung, von der maximal tolerierbaren Wärmefreisetzung beim Rußabbrand während der Regeneration oder abhängig von anderen, gegebenenfalls motorischen Betriebsgrößen festlegbar sein.

Vorzugsweise wird die Rußbeladung des Partikelfilters durch zwei oder mehrere Leiterstrukturen ermittelt, welche in Strömungsrichtung versetzt zueinander angeordnet sind. Dadurch kann die Rußbeladung von zwei oder mehreren, sich gegebenenfalls überlappenden Bereichen des Partikelfilters ermittelt werden, und die Regeneration des Partikelfilters wird ausgelöst, wenn die Rußbeladung in wenigstens einem der erfassten Volumenteilbereiche des Partikelfilters den vorgebbaren oberen Grenzwert überschritten hat. Zweckmäßigerweise wird die Dauer der Regeneration an die vor der Auslösung der Regeneration ermittelte Beladung des Partikelfilters angepasst. Der verbrauchsintensive Regenerationsbetrieb wird auf diese Weise nur so lange wie nötig aufrechterhalten, was eine besonders kraftstoffverbrauchssparende Partikelfilterregeneration ermöglicht. Bei mehreren erfassten Volumenteilbereichen ist es insbesondere vorteilhaft, die Dauer der Partikelfilterregeneration an die höchste in einem der jeweiligen Bereiche ermittelte Beladung anzupassen, wodurch eine vollständige Partikelfilterregeneration ermöglicht wird.

Zweckmäßig ist es, die Rußbeladung des Partikelfilters nach erfolgter Regeneration zu ermitteln und mit einem vorgebbaren Sollwert zu vergleichen und die Dauer einer nachfolgenden Regeneration in Abhängigkeit vom Ergebnis des Vergleichs festzulegen. Auf diese Weise kann die Regenerationsdauer optimiert werden. Vorteilhaft ist es auch, die Rußbeladung unmittelbar vor und unmittelbar nach der Regeneration zu ermitteln. Aus der Differenz der Rußbeladungen kann auf diese Weise die Güte der Regeneration ermittelt werden und die Regenerationsdauer nachfolgender Regenerationen im Sinne einer möglichst vollständigen Regeneration festgelegt werden. Vorteilhaft ist es, den Erfolg von mehreren Regenerationen auf die beschriebene Weise zu ermitteln, um einen statistisch besser abgesicherten Mittelwert für die festzulegende Regenerationsdauer zu erhalten.

Die Erfindung erlaubt es auch, die Rußbeladung des Partikelfilters während der Regeneration des Partikelfilters zu ermitteln und die Regeneration zu beenden, wenn die Beladung einen vorgebbaren unteren Grenzwert unterschreitet. Insbesondere bei einer an mehreren Stellen vorgenommenen Rußbeladungsermittlung kann somit der Fortschritt der Regeneration besonders genau verfolgt und das Ende der Regeneration zuverlässig festgelegt werden.

Durch die Erfassung einer oder mehrerer elektrischer Kenngrößen kann bei der Ermittlung der Partikelfilterbeladung ein Rußbeladungsanteil und ein Aschebeladungsanteil ermittelt werden. Da die Permeabilitätszahlen bzw. Dielektrizitätszahlen von Ruß und von gegebenenfalls eisenhaltiger Asche unterschiedlich sind, kann hinsichtlich der Rußbeladung und der Aschebeladung unterschieden werden. Dies ermöglicht eine weiter verbesserte Genauigkeit bei der Ermittlung eines geeigneten Zeitpunkts für die Regeneration des Partikelfilters, da auf Asche zurückgehende Beladungsanteile nicht fälschlicherweise als Rußbeladung interpretiert werden.

Es ist vorteilhaft, zusätzlich einen Abgasdruck stromauf des Partikelfilters zu erfassen und aus dem erfassten Abgasdruck eine mit der Beladung des Partikelfilters korrelierende Größe zu ermitteln und zur Korrektur oder Überprüfung der ermittelten Rußbeladung heranzuziehen. Durch einen vorzugsweise eingangsseitig des Partikelfilters im Abgasstrang angeordneten Druck- oder Differenzdrucksensor kann die Zuverlässigkeit des ermittelten Beladungszustands des Partikelfilters verbessert werden. Weiterhin ist es möglich, eine Plausibilitätsprüfung der ermittelten Beladungen bzw. eine Diagnose oder Kalibrierung der Messanordnung durchzuführen.

Vorteilhafte Ausführungsformen der Erfindung sind in den Zeichnungen veranschaulicht und werden nachfolgend beschrieben. Dabei sind die vorstehend genannten und nachfolgend noch zu erläuternden Merkmale nicht nur in der jeweils angegebenen Merkmalskombination, sondern auch in anderen Kombinationen oder in Alleinstellung verwendbar, ohne den Rahmen der vorliegenden Erfindung zu verlassen. Es zeigen:
- Fig. 1: eine schematische Darstellung eines Rußpartikelfilters mit einem in Strömungsrichtung dahinter angeordneten separaten Rußsensor,
- Fig. 2: den Rußfilterkörper eines entsprechenden Rußpartikelfilters mit an den Längsseiten angeordneten Elektrodenpaaren,
- Fig. 3: eine schematische Darstellung zur Erläuterung des Messvorgangs,
- Fig. 4: eine weitere Anordnung eines an zwei angrenzenden Längsseiten des Rußfilterkörpers angeordneten Elektrodenpaars,
- Fig. 5: ein im Innern des Rußfilterkörpers angeordnetes Elektrodenpaar,
- Fig. 6: eine weitere Anordnung eines im Innern des Rußfilterkörpers angeordneten Elektrodenpaars,
- Fig. 7: eine Kennlinie zur Erläuterung des sich verändernden elektrischen Widerstands,
- Fig. 8: eine Kennlinie zur Erläuterung der sich verändernden Kapazität,
- Fig. 9: zwei Kennlinien zur Erläuterung des sich verändernden Wechselstromwiderstands bei unterschiedlichen-Frequenzen,
- Fig. 10: eine erste schematische Querschnittsdarstellung eines Rußpartikelfilters mit zugehöriger Elektrodenanordnung zur Ermittlung einer Filterbeladung,
- Fig. 11: eine zweite schematische Querschnittsdarstellung eines Rußpartikelfilters mit zugehöriger Elektrodenanordnung zur Ermittlung einer Filterbeladung,
- Fig. 12: eine schematische Darstellung einer auf eine Ebene abgewickelten Elektrodenanordnung zur Ermittlung einer Filterbeladung,
- Fig. 13: eine schematische Perspektivansicht eines Rußpartikelfilterteils sowie eine zugehörige Messanordnung zur Ermittlung der Filterbeladung,
- Fig. 14: ein schematische Querschnittsansicht des Rußpartikelfilterteils gemäß Fig. 13 sowie eine zugehörige Messanordnung zur Ermittlung der Filterbeladung,
- Fig. 15: eine erste schematische Darstellung eines Rußpartikelfilters mit zugehöriger spulenförmiger Leiterstruktur zur Ermittlung der Filterbeladung,
- Fig. 16: eine zweite schematische Darstellung eines Rußpartikelfilters mit zugehöriger spulenförmiger Leiterstruktur zur Ermittlung der Filterbeladung und
- Fig. 17: ein Diagramm zur Verdeutlichung des Zusammenhangs zwischen Filterbeladung und einer damit korrelierenden messtechnisch erfassten elektrischen Kenngröße.

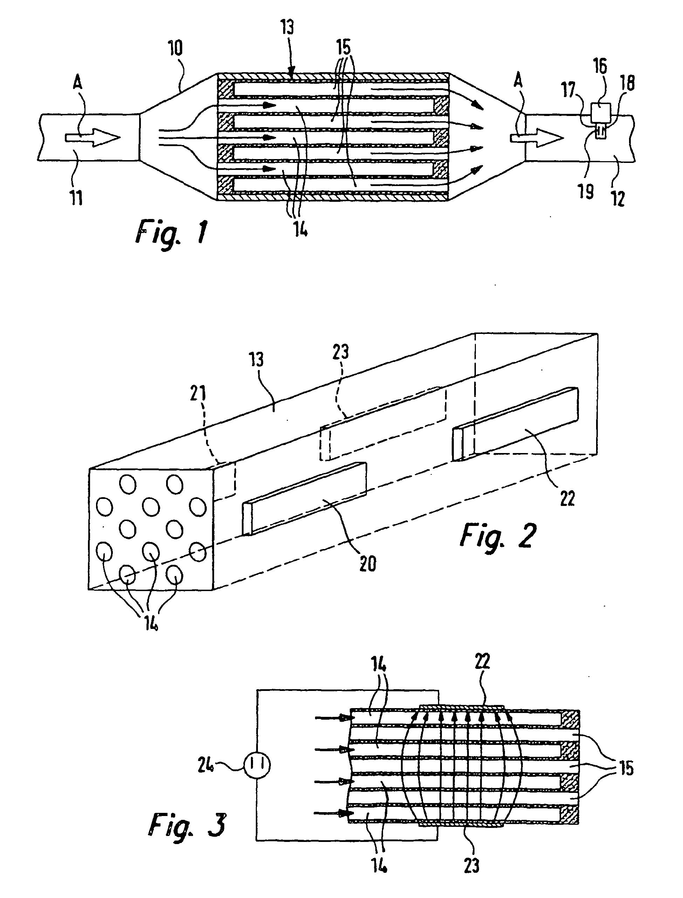

In Figur 1 ist ein Rußpartikelfilter für Kraftfahrzeuge, insbesondere für Dieselfahrzeuge, schematisch dargestellt. Er besteht aus einem Gehäuse 10 mit einem Abgaszulauf 11 und einem Abgasauslass 12. Das Gehäuse 10 enthält einen Rußfilterkörper 13 aus einem Keramikfiltermaterial, der eine Vielzahl von an der Zulaufseite mündenden Sackkanälen 14 und eine Vielzahl von an der Auslassseite mündenden Sackkanälen 15 besitzt. Das Abgas tritt in die zulaufseitigen Sackkanäle 14 ein und gelangt durch die Wandungen in die auslassseitigen Sackkanäle 15. Dabei werden die Rußpartikel durch diese Wandungen ausgefiltert.

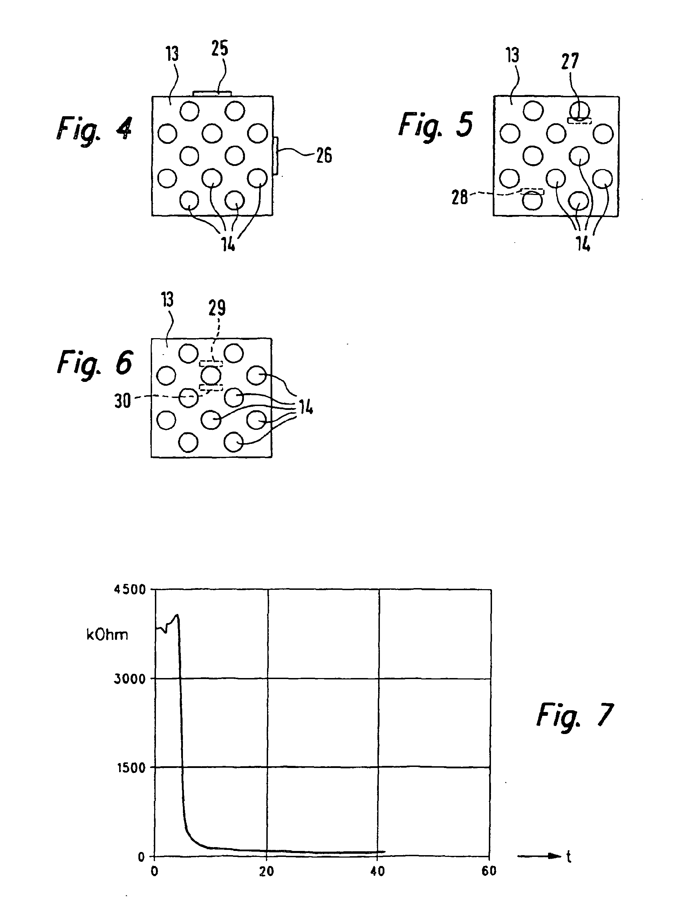

In Strömungsrichtung A hinter dem Rußfilterkörper 13 ist ein Rußsensor 16 im Abgasauslass 12 angeordnet. Er könnte prinzipiell auch näher am Rußfilterkörper 13 oder an dessen Rückseite angeordnet sein. Dieser Rußsensor 16 besteht im Wesentlichen aus einem plättchenförmigen Keramiksubstrat 17, auf dem wenigstens zwei Messelektroden 18, 19 aufgebracht sind. Sie können beispielsweise in Dickschichttechnik, durch Aufpinseln oder Aufsprühen oder in Form einer Interdigitalelektrodenstruktur aufgebracht sein. Rußpartikel setzen sich an der Oberfläche des Keramiksubstrats 17 ab und verändern dadurch die elektrische Impedanz zwischen den Messelektroden 18, 19. Die sich verändernde Impedanz ist ein Maß für die Menge der abgesetzten Rußpartikel. Dies wird in Verbindung mit den Figuren 4 sowie 7 bis 9 noch näher erläutert. Für diesen Rußsensor 16 kann nicht nur die Qualität des Abgases, sondern auch der Zustand des Rußfilterkörpers 13 festgestellt werden, beispielsweise auch einen Durchbruch durch diesen Rußfilterkörper.

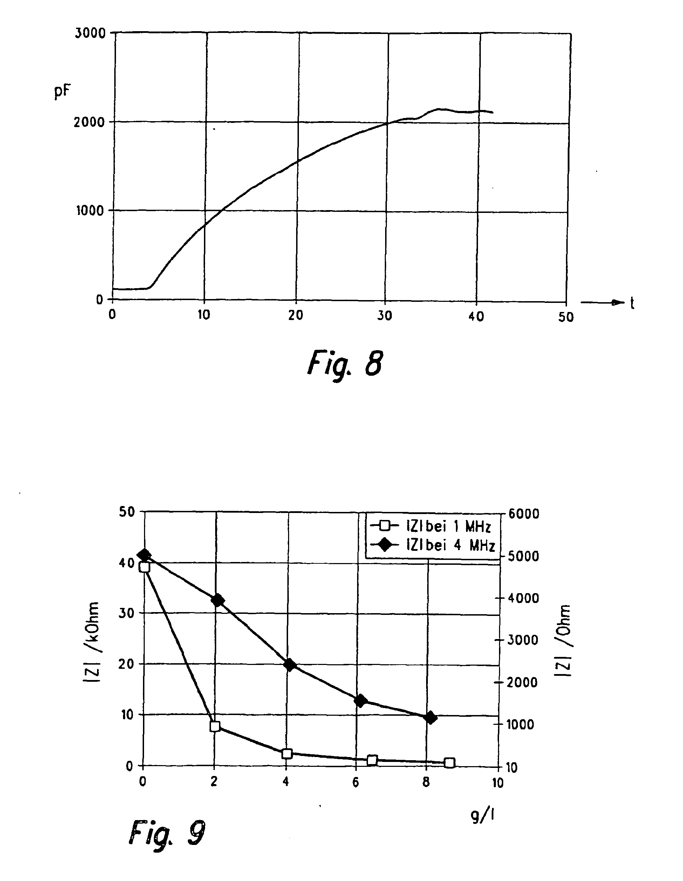

Bei dem in Figur 2 dargestellten Ausführungsbeispiel sind zwei aus Messelektroden 20 bis 23 bestehende Elektrodenpaare an entgegengesetzten Längsseitenflächen des Rußfilterkörpers 13 angeordnet. Diese Messelektroden 20 bis 23 können beispielsweise in Form von Drähten, Plättchen, aufgetragenen Flächen oder in Dickschichttechnik auf dem keramischen Rußfilterkörper 13 aufgebracht sein. Bei diesem Ausführungsbeispiel dient der Rußfilterkörper 13 selbst als Sensor und es wird die Abhängigkeit der elektrischen Impedanz zwischen den Messelektroden 20, 21 bzw. 22, 23 von der Beladung des Rußfilterkörpers mit Rußpartikeln ausgenutzt. Die gemessene Impedanz ist jeweils ein Maß für die Rußbeladung des Partikelfilters und damit ein Maß für den Partikelfilterzustand. Zur Messung der Impedanz zwischen den Messelektroden 20, 21 bzw. 22, 23 dient eine Impedanzmesseinrichtung 24, die auch als einfache Widerstandsmesseinrichtung ausgebildet sein kann, beispielsweise auch als Gleichstrom-Widerstandsmesseinrichtung. Figur 7 zeigt, dass der Widerstand zwischen den Messelektroden bei zunehmender Betriebsdauer t abnimmt, da sich immer mehr leitende Rußpartikel zwischen den Messelektroden im Rußfilterkörper 13 ansammeln. Entsprechend zeigt Figur 8 die sich mit wachsender Rußbeladung verändernde Kapazität zwischen den Messelektroden im Falle einer Ausbildung der Impedanzmesseinrichtung 24 als Kapazitätsmesseinrichtung. Schließlich zeigt noch Figur 9 den sich verändernden Wechselstromwiderstand bei zunehmender Rußbeladung g/l (Gramm pro Liter Volumen) bei zwei unterschiedlichen Messfrequenzen. Bei der Messfrequenz 1 MHz gilt die auf der linken Seite dargestellte Widerstandsmessskala und bei einer Messfrequenz von 4 MHz die auf der rechten Seite dargestellte Widerstandsmessskala

Zusätzlich zum Betrag der elektrischen Impedanz kann auch die Phase der elektrischen Impedanz als Maß für den Verrußungszustand des Rußpartikelfilters verwendet werden.

Die beschriebenen Messmethoden sind selbstverständlich entsprechend für den Rußsensor 16 bzw. dessen Messelektroden 18, 19 einsetzbar.

Beim in Figur 2 dargestellten Ausführungsbeispiel sind die beiden Elektrodenpaare mit den Messelektroden 20, 21 bzw. 22, 23 in der Strömungsrichtung A hintereinander angeordnet. Hierdurch kann die Rußpartikelbeladung auch örtlich bzw. räumlich differenziert gemessen werden. Die Zahl der Messelektroden kann hierzu selbstverständlich auch noch größer sein. Dabei können diese Elektrodenpaare auch noch in axialer und radialer Richtung zueinander versetzt und beispielsweise spiralförmig angeordnet sein. Auch eine alternative oder zusätzliche Anordnung an den Stirnflächen des Rußfilterkörpers 13 ist möglich. Im einfachsten Falle kann selbstverständlich auch nur ein einziges Elektrodenpaar vorgesehen sein.

In den Figuren 4 bis 6 sind weitere Anbringungsmöglichkeiten der Messelektroden dargestellt. So können gemäß Figur 4 zwei Messelektroden 25, 26 an zwei nebeneinanderliegenden Längsseiten des Rußfilterkörpers 13 angeordnet sein. Gemäß Figur 5 sind zwei Messelektroden 27, 28 an unterschiedlichen Sackkanälen 14 und gemäß Figur 6 zwei Messelektroden 29, 30 gegenüberliegend an einem der Sackkanäle 14 angeordnet. Auch bei diesen Ausführungen können wiederum mehrere Elektrodenpaare in der Strömungsrichtung A hintereinander angeordnet sein, wobei auch Kombinationen der dargestellten Anordnungen möglich sind.

Das Messsignal für die Rußpartikelbeladung des Rußfilterkörpers 13 oder des Keramiksubstrats 17 ist temperaturabhängig. Zur Kompensation muss daher die Temperatur durch wenigstens einen Temperatursensor gemessen werden, wobei dann das Temperaturmesssignal zur Kompensation der in den Figuren 7 bis 9 dargestellten Kennlinien und Messergebnisse verwendet wird. Ein solcher Temperatursensor kann beispielsweise an einer beliebigen Stelle im Rußfilterkörper 13 angeordnet sein, er kann jedoch auch beispielsweise in oder an einer der Messelektroden integriert sein, beispielsweise in Form eines aufgedruckten Dickschichtmetallwiderstandes. Es kann sich dabei um eine aufgedruckte elektrische Leiterstruktur handeln, oder eine Messelektrode oder mehrere Messelektroden können die Form einer elektrischen Leiterbahn haben, deren Widerstandswert von der Temperatur abhängt. Die Widerstände der Messelektroden selbst sind dann ein Maß für die Temperatur und die Impedanzen zwischen den Messelektroden ein Maß für den Filterzustand bzw. die Filterbeladung mit Ruß. Eine andere Möglichkeit besteht darin, den Temperatursensor durch eine Isolationsschicht getrennt unter einer Messelektrode anzuordnen. Im Falle des Rußsensors 16 kann der Temperatursensor auch an der Rückseite des Keramiksubstrats 17 angeordnet sein oder ebenfalls durch ein Dielektrikum getrennt unter den Messelektroden 18, 19 angeordnet sein.

Die erhaltenen Messwerte bzw. Messkurven gemäß den Figuren 7 bis 9 können auch zur automatischen Regenerierung des Rußpartikelfilters herangezogen werden. Es können hierzu Grenzwerte für den Widerstand bzw. die Kapazität oder Impedanz gebildet werden, nach deren Erreichen automatisch die Filterregenerierung ausgelöst wird. Diese erfolgt üblicherweise durch Veränderung des Motorbetriebszustandes derart, dass heißere Abgase gebildet werden, durch die im Rußpartikelfilter abgesetzte Rußpartikel verbrennen. Durch diesen Regenerationsvorgang verändern sich die Widerstands- bzw. Kapazitäts- und/oder Impedanzwerte in der umgekehrten Richtung und es können neue Grenzwerte festgesetzt werden, ab denen der Regenerationsvorgang beendet wird.

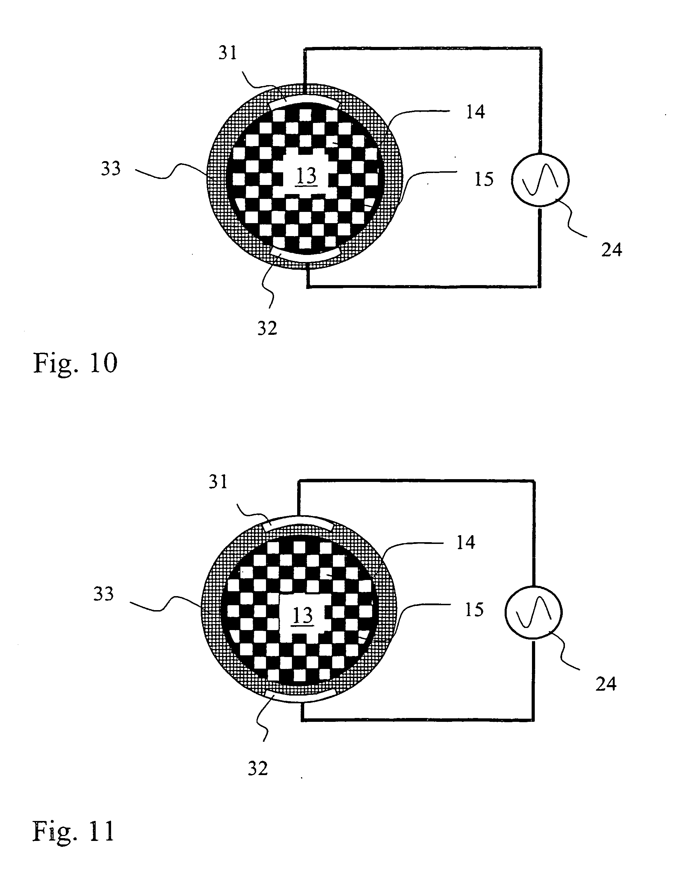

In Fig. 10 ist ein Rußpartikelfilter 13 schematisch im Querschnitt mit Blick auf die Gaseintrittsseite dargestellt. Dabei sind Bauteile, soweit sie denen der Fig. 1 entsprechen mit den gleichen Bezugszeichen versehen. Der Rußpartikelfilter 13 ist in dem hier nicht dargestellten Gehäuse eingebaut und im Gehäuse durch eine den Rußpartikelfilter 13 umgebende Montagematte 33 mechanisch fixiert.

Erfindungsgemäß ist für den Rußpartikelfilter 13 eine Messanordnung mit einer ersten Messelektrode 31 und einer zweiten Elektrode 32 vorgesehen, mit welcher die Beladung des Rußpartikelfilter 13 ermittelt werden kann. Dabei sind die Messelektroden 31, 32 vorzugsweise flächig ausgebildet und einander gegenüberliegend angeordnet. Dabei können die oder eine der Messelektroden 31, 32 im Inneren des Rußpartikelfilters 13 angeordnet sein. Nachfolgend wird auf vorteilhafte Anordnungen eingegangen, bei welcher die Messelektroden 31, 32 auf der äußeren Oberfläche des Rußpartikelfilters 13 oder mit geringem Abstand zur äußeren Oberfläche des Rußpartikelfilters 13 angeordnet sind.

In Fig. 10 ist der Fall dargestellt, dass die Elektroden 5, 6 diametral entgegengesetzt auf der äußeren Oberfläche des Rußpartikelfilters 13 direkt aufliegend angeordnet sind. Die Messelektroden 31, 32 bilden auf diese Weise die Platten eines Plattenkondensators, dessen Dielektrikum durch die zwischen den Messelektroden 31, 32 befindliche Materie gebildet wird. Es ist vorgesehen, die Impedanzmesseinrichtung 24 neben der Spannungs- bzw. Stromversorgung auch zur Auswertung des Messsignals einzusetzen.

Die im Volumenteilbereich des Rußpartikelfilters 13 zwischen den Messelektroden 31, 32 wirksame elektrische Impedanz ist einerseits von der Fläche der Messelektroden 31, 32 und von deren Abstand, d.h. dem Durchmesser des Rußpartikelfilters 13 an der betreffenden Stelle abhängig. Andererseits ist die Impedanz jedoch auch von der Dielektrizitätszahl der zwischen den Messelektroden 31, 32 befindlichen Materie abhängig. Auf Grund der vergleichsweise hohen Dielektrizitätszahl von im Rußpartikelfilter 13 abgelagertem Ruß kann die Rußbeladung im von der Impedanzmessung erfassten Volumenbereich mit hoher Genauigkeit gemessen werden. Dabei ist es vorgesehen, die elektrische Impedanz sowohl hinsichtlich ihres Imaginärteils als auch ihres Realteils bzw. nach Betrag und Phase auszuwerten. Nachfolgend wird mit Bezug auf die genannten Messgrößen vereinfachend von einem Messsignal gesprochen. Die Auswertung des Messsignals kann hierbei von der Impedanzmessanordnung 24 oder von einer separaten, hier nicht dargestellten Auswerteeinrichtung vorgenommen werden.

In diesem Zusammenhang ist es vorteilhaft, die Messfrequenz zur Ermittlung der Impedanz im Sinne eines möglichst großen Messsignals und einer möglichst zuverlässigen Aussage über die Beladung geeignet zu wählen oder gegebenenfalls zu variieren. Vorteilhafterweise wird die Frequenz der Messspannung im Bereich zwischen 1 kHz und etwa 30 MHz eingestellt. Bevorzugt ist ein Frequenzbereich von etwa 1 MHz bis etwa 20 MHz, besonders bevorzugt beträgt die Messfrequenz etwa 10 MHz. Vorteilhaft ist es in diesem Zusammenhang auch, gleichzeitig die Temperatur in dem maßgebenden Rußpartikelfilterbereich oder im Bereich der Messelektroden 31, 32 zu erfassen. Somit können Temperaturabhängigkeiten des Impedanzmesswertes korrigiert werden bzw. eine Temperaturkompensation des Messsignals vorgenommen werden.

Die Messelektroden 31, 32 können beispielsweise mittels Dickschichttechnik auf der Oberfläche des Rußpartikelfilters 13 oder auch durch Aufsprühen oder Aufpinseln eines elektrisch leitfähigen Materials aufgebracht sein. Vorteilhaft ist es auch, metallhaltige Folien mit dem Filterkörper beispielsweise durch Versintern in innigen Kontakt zu bringen. Eine Lagefixierung der Messelektroden 31, 32 auf dem Filterkörper kann auch durch die im eingebauten Zustand auftretende Presskraft der Montagematte 33 erfolgen.

In Fig. 11 ist eine weitere vorteilhafte Anordnung dargestellt, wobei die in Bezug auf Fig. 10 funktionsgleichen Bestandteile mit den gleichen Bezugszeichen versehen sind. Im Gegensatz zu der in Fig. 10 dargestellten Anordnung sind die Messelektroden 31, 32 gemäß Fig. 11 nicht unmittelbar mit dem Rußpartikelfilter 13 in Berührkontakt, sondern in geringem Abstand zur Oberfläche des Rußpartikelfilters 13 angeordnet. Beispielsweise aufgrund der geringeren thermischen Belastung kann es vorteilhaft sein, die Messelektroden 31, 32 im Außenbereich der Montagematte 33 anzuordnen, oder in die Montagematte 33 einzubetten. Je nach Dicke der Montagematte 33, sind die Messelektroden 31, 32 typischerweise in einem Abstand im Millimeterbereich zur Oberfläche des Partikelfilterkörpers angeordnet. Für diese Anordnung ist es vorteilhaft, die Messelektroden 31, 32 in Folienform auszubilden.

Erfindungsgemäß ist es vorgesehen, wenigstens zwei, vorzugsweise mehrere Messelektroden 31, 32 an unterschiedlichen Stellen anzubringen, wodurch eine ortsaufgelöste Ermittlung der Beladung im Rußpartikelfilter 13 ermöglicht wird. Die von der Impedanzmessung erfassten Volumenteilbereiche können sich dabei überlappen oder voneinander getrennt sein. Auf diese Weise kann die Beladung des Rußpartikelfilters 13 lokal ermittelt werden. Je nach Größe des Rußpartikelfilters 13 und nach der angestrebten Ortsauflösung können drei, vier, oder mehr Elektrodenananordnungen, vorzugsweise in Abgasströmungsrichtung versetzt angeordnet sein. Da insbesondere der ausströmseitige Endbereich des Rußpartikelfilters 13 verstopfungsanfällig ist, ist es bei mehreren erfassten Volumenteilbereichen vorteilhaft, diese in Strömungsrichtung des Abgases zunehmend dichter anzuordnen, was die Genauigkeit der Beladungsermittlung verbessert.

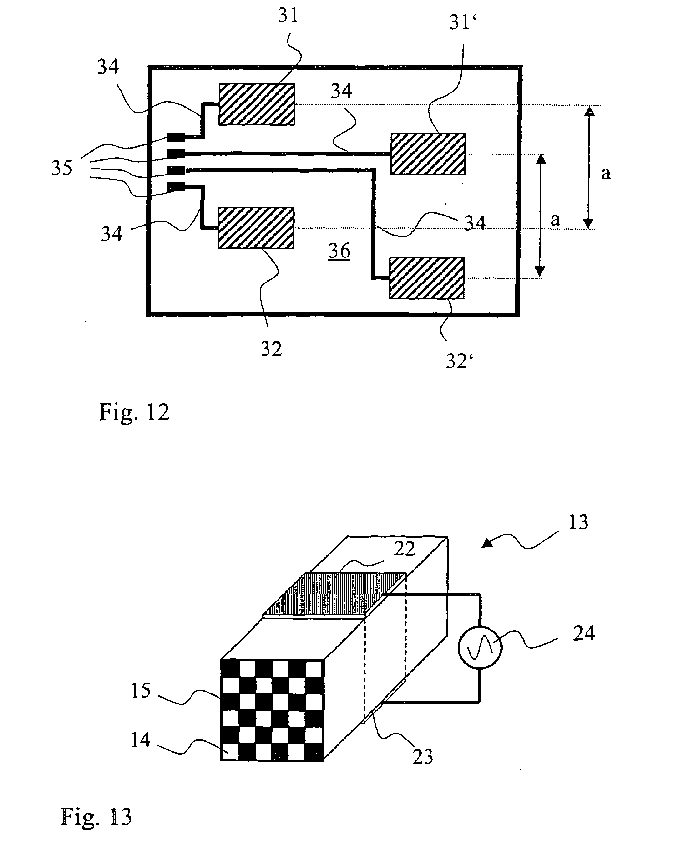

In Fig. 12 ist eine auf eine Ebene abgewickelte Elektrodenanordnung von zwei Elektrodenpaaren 31, 32 und 31', 32' schematisch dargestellt. Vorzugsweise sind die Elektroden 31, 32 und 31', 32' als Schicht auf einem dünnen und biegsamen Träger 36 aufgebracht, der anliegend an den Rußpartikelfilter 13 oder an die Montagematte 33 montiert wird. Auf dem Träger 36 sind Zuleitungen 34 zu den Elektroden 31, 32 und 31', 32' aufgebracht, welche zu Anschlusskontakten 35 führen, die vorzugsweise an einem Endbereich des Trägers 36 angeordnet sind. Mittels eines nicht dargestellten Steck- oder Klemmkontakts ist so auf einfache Weise eine Verbindung mit der in Fig. 12 nicht dargestellten Impedanzmesseinrichtung 24 ermöglicht. Diese Anordnung hat zusätzlich den Vorteil, dass für die Verbindung mit dem Impedanzmesseinrichtung 24 nur eine einzige Durchkontaktierung des den Rußpartikelfilters 13 umschließenden Gehäuses realisiert werden muss.

Vorteilhaft ist es, die Elektroden 31, 32 und 31', 32' in Bezug auf ihre Mittellängsachse in einem Abstand a auf dem Träger 36 anzuordnen, welcher etwa dem halben Umfang des Rußpartikelfilters 13 entspricht. Auf diese Weise sind die Elektroden 31, 32 und 31', 32' im montierten Zustand des Trägers 36 etwa diametral gegenüberliegend angeordnet. Ferner ist es vorteilhaft, die Elektroden 31, 32 und 31', 32' versetzt in Querrichtung bzw. in Längsrichtung des Trägers 36 auf diesem anzuordnen.

In Fig.13 ist ein Segment eines Rußpartikelfilters 13 ausschnittsweise in einer schematischen Perspektivansicht dargestellt. Dabei sind die Bauteile, soweit sie denen der Fig. 3 entsprechen mit den gleichen Bezugszeichen gekennzeichnet.

Für den Rußpartikelfilter 13 ist eine Messanordnung mit einer Elektrodenstruktur vorgesehen, mit welcher die Beladung des Rußpartikelfilters 13 ermittelt werden kann. Dabei ist die Elektrodenstruktur hier beispielhaft durch eine erste, etwa rechteckige, planare Elektrode 22 und eine diametral entgegengesetzt angeordnete zweite, ebenso gestaltete Elektrode 23 gebildet. Die Elektroden 22, 23 werden vorzugsweise wie dargestellt so angeordnet, dass die zwischen ihren jeweiligen Mittelpunkten verlaufende gedachte Verbindungslinie senkrecht zur Längsrichtung der Kanäle 14, 15 des Rußpartikelfilters 13 orientiert ist. Die Elektroden 22, 23 bilden somit die Endflächen eines zusammenhängenden, etwa zylinderförmigen Volumenteilbereichs des Rußpartikelfilters 13, wobei dieser Volumenteilbereich hier überall einen etwa rechteckigen Querschnitt aufweist. Die Längsabmessungen des zylinderförmigen Volumenteilbereichs entsprechen hier den Querabmessungen des Rußpartikelfilters 13bzw. des Filtersegments und die Elektroden 22, 23 liegen jeweils außen am Partikelfilter an.

Die Elektroden 22, 23 bilden auf diese Weise die Platten eines Plattenkondensators, dessen Dielektrikum durch die zwischen den Elektroden 22, 23 befindliche Materie gebildet wird.

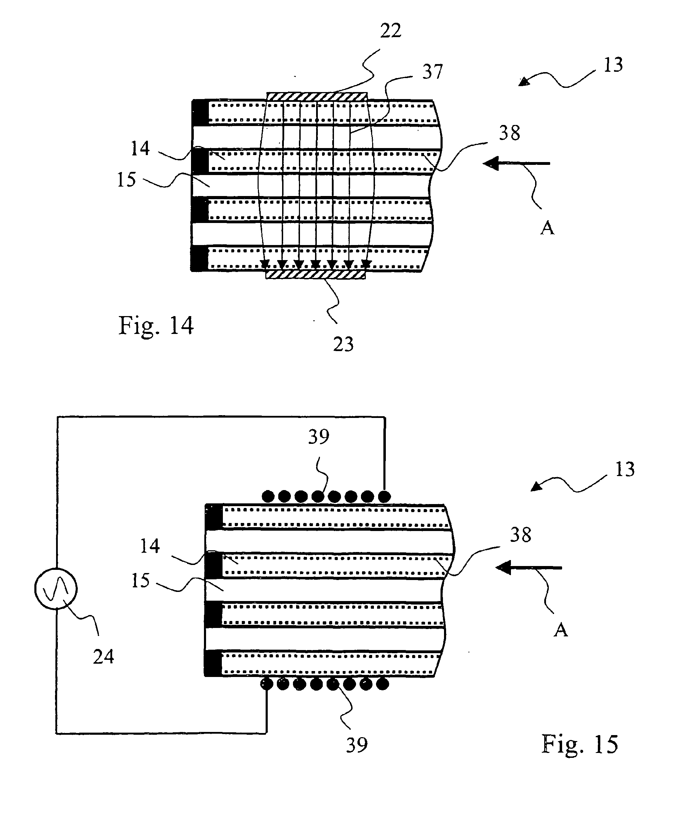

Der Sachverhalt ist in Fig. 14 nochmals in einer schematischen Querschnittsansicht dargestellt, wobei auf die Darstellung des Impedanzmesseinrichtung 24 sowie der zugehörigen Zuleitungen verzichtet wurde. Schematisch dargestellt ist ferner die auf der Innenseite der Sackkanäle 14 auftretende, meist schichtförmig in Erscheinung tretende Beladung 38 mit Ruß und/oder Asche.

Vorteilhaft ist es, einen aus mehreren strömungsmäßig parallel geschalteten Segmenten zusammengesetzten Rußpartikelfilter 13 einzusetzen. Dabei sind Partikelfiltersegmente mit rechteckigem oder quadratischen Querschnitt bevorzugt. Insgesamt kann durch eine äußere Abrundung eines solcherart aus einzelnen Segmenten zusammengesetzten Rußpartikelfilters dennoch ein Filterkörper mit rundem oder ovalen Querschnitt erhalten werden. Die einzelnen Segmente werden mechanisch mit einer teilelastischen Verbindungsmasse bündig miteinander verbunden. In diesem Fall ist es vorteilhaft, die Elektroden 22, 23 an der Stoßstelle zwischen zwei jeweils aneinanderstoßenden Segmenten anzubringen, so dass sie auf der Außenseite eines jeweiligen Segments aufliegen und von der Verbindungsmasse umschlossen sind. Die geschilderte Anordnung ist jedoch hier nicht gesondert dargestellt. Ein von der Messanordnung erfasster Volumenteilbereich des Rußpartikelfilters 13 kann mit der geschilderten Messanordnung auch vollkommen im Inneren des Filterkörpers angeordnet und von Partikelfiltermaterial umgeben sein. Auf die geschilderte Weise ist es daher ermöglicht, eine in Bezug auf die Abgasströmungsrichtung A radiale Abhängigkeit der Filterbeladung zu ermitteln.

Erfindungsgemäß wird die elektrische Kapazität bzw. die komplexe elektrische Impedanz des durch die Elektroden 22, 23 gebildeten Kondensators durch Impedanzmesseinrichtung 24 ermittelt. Dabei ist durch die symbolischen Feldlinien 37 der von der Impedanzmessung erfasste Volumenteilbereich des Rußpartikelfilters 13 schematisch dargestellt.

Bei der in Fig. 15 dargestellten Vorrichtung ist ein Rußpartikelfilter 13 mit einer Messanordnung mit einer Spule 39 als Leiterstruktur gezeigt, mit welcher die Beladung des Rußpartikelfilters 13 ermittelt werden kann. Die Wicklungen der Spule 39 umgeben einen Abschnitt des Rußpartikelfilters 13. Vorzugsweise liegen die Wicklungen der Spule 39 an der Oberfläche des Rußpartikelfilters 13 an oder weisen einen geringen Abstand zu ihr auf.

Die Messanordnung umfasst weiter eine Impedanzmesseinrichtung 24, die über Zuleitungen an die Spule 39 angeschlossen ist. Über die Impedanzmesseinrichtung 24 wird die Spule 39 mit einer vorzugsweise als Wechselspannung ausgebildeten Messspannung versorgt. Der von der Spule 39 umgebene Abschnitt des Rußpartikelfilters 13 bildet den Kern der Spule, weshalb deren Induktivität L wesentlich von der als Spulenkern wirksamen Materie bzw. deren Permeabilitätszahl µᵣ bestimmt wird. Auf Grund der unterschiedlichen Permeabilitätszahlen µᵣ von Ruß und den mineralartigen Aschen kann anhand der erfassten Induktivität L dabei zwischen der Rußbeladung und der Aschebeladung unterschieden werden. Dabei ist die erfasste Induktivität mit der komplexen elektrischen Impedanz der Leiterstruktur 39 verknüpft und es ist vorgesehen, diese hinsichtlich ihres Imaginärteils und/oder ihres Realteils bzw. nach Betrag und Phase auszuwerten. Neben der Induktivität L können auch die elektrischen Verluste, wie ohmsche Verluste oder Wirbelstromverluste erfasst und ausgewertet werden. Nachfolgend wird mit Bezug auf die genannten Messgrößen vereinfachend von einem Messsignal gesprochen. Es ist vorgesehen, die Impedanzmesseinrichtung 24 neben der Spannungs- bzw. Stromversorgung auch zur Auswertung des Messsignals einzusetzen. Die Auswertung des Messsignals kann jedoch auch von einer separaten Messeinrichtung vorgenommen werden.

In diesem Zusammenhang ist es vorteilhaft, die Messfrequenz bei der Ermittlung der Induktivität im Sinne eines möglichst großen Messsignals und einer möglichst zuverlässigen Aussage über die Beladung geeignet zu wählen oder gegebenenfalls zu variieren. Vorteilhafterweise wird die Frequenz der Messspannung im Bereich zwischen 1 kHz und etwa 30 MHz eingestellt. Bevorzugt ist ein Frequenzbereich von etwa 100 kHz bis etwa 10 MHz, besonders bevorzugt beträgt die Messfrequenz etwa 1 MHz. Die Amplitude der von der Impedanzmesseinrichtung 24 an die Spule 39 angelegten Versorgungsspannung wird vorzugsweise in einem Bereich zwischen 1 V und 1000 V gewählt. Da die Induktivität L der Spule 39 auch von ihrer Geometrie bzw. Windungszahl abhängig ist, kann über die Anpassung dieser Größen die Empfindlichkeit ebenfalls geeignet angepasst werden. Vorteilhaft ist es in diesem Zusammenhang auch, gleichzeitig die Temperatur in dem maßgebenden Filterbereich oder im Bereich der Leiterstruktur 39 zu erfassen, um Temperaturabhängigkeiten des Induktivitätsmesswertes bzw. Impedanzmesswertes korrigieren zu können.

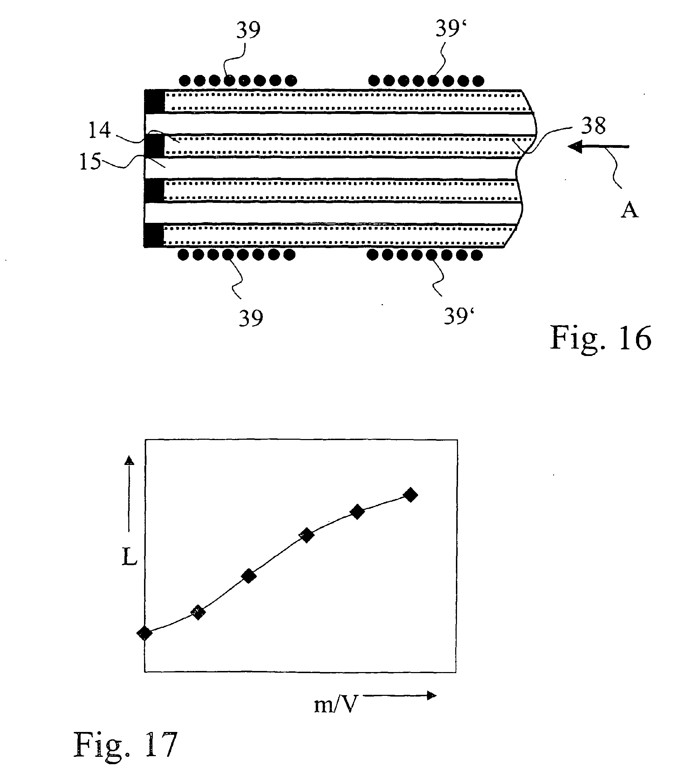

Es kann vorgesehen sein, wenigstens zwei spulenförmige Leiterstrukturen an unterschiedlichen Stellen anzubringen, wodurch eine ortsaufgelöste Ermittlung der Beladung im Rußpartikelfilter 13 ermöglicht wird. In Fig. 16 ist eine Anordnung mit einer ersten Spule 39 und einer demgegenüber axial in Bezug auf den Partikelfilter versetzt angeordneten zweiten Spule 39' schematisch dargestellt. Dabei sind aus Gründen der Übersichtlichkeit die Impedanzmesseinrichtung und die Zuleitungen zu den Spulen 39, 39' nicht mit dargestellt. In Bezug auf Fig. 15 sind funktionsgleiche Bestandteile mit den gleichen Bezugszeichen versehen. Durch die versetzte Anordnung der Spulen 39, 39' kann die Beladung des Rußpartikelfilters 13 lokal ermittelt werden. Je nach Größe des Rußpartikelfilters 13 und nach der angestrebten Ortsauflösung können drei, vier, oder mehr Leiterstrukturen, vorzugsweise in Abgasströmungsrichtung versetzt zueinander angeordnet sein. Da insbesondere der ausströmseitige Endbereich des Rußpartikelfilters 13 verstopfungsanfällig ist, ist es vorteilhaft, zumindest eine Leiterstruktur am Ausströmbereich des Rußpartikelfilters 13 anzuordnen.

Neben der direkten Umwicklung des Filterkörpers mit der spulenförmigen Leiterstruktur 39 sind weitere, sich durch einfache Abwandlungen ergebende und daher nicht näher dargestellte Anordnungen möglich. Beispielsweise kann die Leiterstruktur 39 spulenförmig an der Innenfläche eines Gehäuses, welches den Rußpartikelfilter 13 umgibt, angebracht sein. Weiter kann es vorteilhaft sein, eine spulenförmige Leiterstruktur vollkommen im Inneren des Rußpartikelfilters 13 parallel oder auch quer zur Abgasströmungsrichtung A anzuordnen. Durch Überlappung von Spulen unterschiedlichen Durchmessers kann eine gekoppelte Spulenanordnung mit vorgebbarer Kopplung geschaffen werden.

Bei mehreren, insbesondere versetzt zueinander angeordneten Spulen ist es auch vorteilhaft, eine mit der Gegeninduktivität einer Spule korrelierende Größe, beispielsweise die Gegeninduktivität einer Spule gegenüber einer anderen Spule zu erfassen und hinsichtlich der Filterbeladung auszuwerten. Bei einer nicht dargestellten besonders vorteilhaften Ausführung sind drei Spulen in Abgasströmungsrichtung hintereinander angeordnet und beispielsweise um den Filterkörper gewickelt oder umgeben hintereinanderliegende Volumenbereiche des Filterkörpers. Die mittlere Spule kann als Sender betrieben werden, während die beiden anderen Spulen jeweils als Empfänger für das von der mittleren Spule in ihnen induzierte magnetische Feld betrieben werden. Bei einer solchen Anordnung können vorteilhaft Unsymmetrien hinsichtlich der axialen Verteilung der Filterbeladung erfasst werden. Auf diese Weise kann eine meist von der Ausströmseite des Rußpartikelfilters ausgehende Aschebeladung bzw. Filterverstopfung erkannt und bewertet werden.

Zur Verdeutlichung des mittels einer Messanordnung gemäß Fig. 15 erfassten Messeffekts ist in einem in Fig. 17 dargestellten Diagramm die erfasste Induktivität L einer Spule 39 in Abhängigkeit von der volumenbezogenen Rußbeladung m/V des Partikelfilters dargestellt. Der Rußpartikelfilter 13 wurde unter realitätsnahen Bedingungen mit dem rußpartikelhaltigen Abgas eines nicht dargestellten Dieselmotors beaufschlagt und die Messanordnung gemäß Fig. 15 kontinuierlich betrieben. Dabei wurden Induktivitätswerte L im Bereich einiger Mikro-Henry bei Rußbeladungen m/V im Bereich von einigen Gramm Ruß je Liter Filtervolumen gemessen. Wie aus dem in Fig. 17 dargestellten Diagramm ersichtlich, ist die Abhängigkeit der als Messsignal ausgewerteten Induktivität L von der Rußbeladung m/V annähernd linear, so dass der Beladungszustand des Rußpartikelfilters 13 zuverlässig ermittelt werden kann. Die aufgrund der Filterbeladung auftretenden Induktivitätsänderungen können beispielsweise über die Veränderung der Resonanzfrequenz eines Schwingkreises ermittelt werden, die von der Induktivität der Leiterstruktur 39 bestimmt ist.

Mittels der erläuterten Vorrichtungen können Rußansammlungen ortsaufgelöst erfasst werden und es kann eine Regeneration des Rußpartikelfilters eingeleitet werden, wenn die Rußbeladung in wenigstens einem der erfassten Volumenteilbereiche einen vorgebbaren Grenzwert überschreitet. Dadurch wird vermieden, dass der Rußpartikelfilter lokal über ein zulässiges Mindestmaß hinaus mit Ruß beladen wird und dadurch bei einer Regeneration durch Rußabbrand durch übermäßige Wärmefreisetzung an dieser Stelle zerstört wird. Es versteht sich, dass eine Regeneration auch ausgelöst wird, wenn festgestellt wird, dass die integrale Gesamtbeladung des Rußpartikelfilters einen vorgebbaren Schwellenwert überschreitet. Ferner ist es vorteilhaft, den die Regeneration auslösenden Grenzwert gegebenenfalls anzupassen, um beispielsweise auf sich ändernde Regenerationsbedingungen zu reagieren. Auf diese Weise wird ein unzulässiges Ansteigen des durch die Partikelfilterbeladung verursachten Gegendrucks vermieden. Durch das bedarfsgerechte, an die tatsächliche Rußbeladung angepasste Auslösen der Partikelfilterregeneration wird die Anzahl der Regenerationen auf ein Mindestmaß beschränkt und damit auch die thermische Belastung des Rußpartikelfilters und gegebenenfalls vorhandener weiterer Abgasreinigungseinheiten gering gehalten.

Die für die Auslösung einer Regeneration maßgebenden Grenzwerte für die lokale Beladung bzw. die integrale Beladung werden zweckmäßigerweise in einem Steuergerät hinterlegt. Vorzugsweise wird von diesem Steuergerät der Betrieb des Dieselmotors gesteuert und für eine Regeneration des Rußpartikelfilters umgestellt. Hierfür geeignete Betriebsweisen sind dem Fachmann geläufig und bedürfen daher hier keiner weiteren Erläuterung.

Vorteilhaft ist es, wenn die Regenerationszeit des Rußpartikelfilters in Abhängigkeit von der vor der Auslösung der Regeneration festgestellten lokalen und/oder integralen Beladung z.B. durch eine kennfeldbasierte Regenerationszeitvorgabe festgelegt wird. In diesem Zusammenhang ist es vorteilhaft, die Temperatur im Rußpartikelfilter zu erfassen und die Regenerationszeit in Abhängigkeit von vorab gespeicherten Rußabbrandgeschwindigkeiten für die jeweilige Temperatur festzulegen. Der Erfolg der Regeneration wird zweckmäßig nach Abschluss der Regeneration durch eine erneute Ermittlung der Beladung überprüft. Die Regenerationszeitvorgabe kann entsprechend korrigiert werden, indem ein Vergleich zwischen der festgestellten Beladung vor und nach der Regeneration ausgewertet wird. Auf diese Weise wird vermieden, dass der für die Regeneration erforderliche Betriebszustand länger als notwendig aufrechterhalten bleibt; der Energieaufwand bzw. Kraftstoffmehrverbrauch für die Regeneration wird dadurch klein gehalten. Für eine zuverlässige Festlegung der Regenerationsdauer ist es dabei zweckmäßig, eine Mittelung aus den entsprechenden Werten vor und nach mehreren Regenerationen vorzunehmen.

Besonders vorteilhaft ist es, die Beladung des Rußpartikelfilters auch während der Regeneration zu überwachen. Der Regenerationsbetrieb wird dann vorzugsweise solange aufrechterhalten, bis die Beladung in jedem der von entsprechenden Elektrodenpaaren erfassten Volumenteilbereiche einen vorgebbaren unteren Grenzwert unterschritten hat. Auf diese Weise werden unvollständige Partikelfilterregenerationen vermieden und die Aufnahmekapazität des Rußpartikelfilters für den nachfolgenden Normalbetrieb des Dieselmotors wird maximiert.

Die Ermittlung der Partikelfilterbeladung in zwei oder mehreren Volumenteilbereichen des Rußpartikelfilters wird vorteilhafterweise auch zur Differenzierung zwischen einem Rußbeladungsanteil und einem Aschebeladungsanteil genutzt. Hierzu wird ausgenützt, dass sich das Messsignal eines jeweiligen Elektrodenpaares additiv aus einem durch die Rußbeladung und einem durch die Aschebeladung verursachten Anteil zusammensetzt und die Aschebeladung kontinuierlich anwächst. Obschon der Beitrag der Aschebeladung am gesamten Messsignal gering ist, kann der Aschebeladungsanteil gegebenenfalls ermittelt werden, wenn der zeitliche Verlauf des Messsignals erfasst wird und ein im Verlauf der Einsatzdauer des Rußpartikelfilters 13 stetig anwachsender Signalanteil ermittelt und berücksichtigt wird. Vorteilhaft ist in diesem Zusammenhang auch eine Variation der Messfrequenz.

Insbesondere bei einem sehr geringen Anteil der Aschebeladung am Messsignal ist es vorteilhaft, die Aschebeladung indirekt zu ermitteln, indem das Messsignal hinsichtlich seines zeitlichen und örtlichen Verlaufs ausgewertet wird. Insbesondere ist es möglich, auf Grund des gegebenenfalls unterschiedlichen Verlauf des Messsignals festzustellen, inwieweit ein Teil des Rußpartikelfilters stärker verrußt als ein anderer, bzw. ob auf Grund einer sehr starken Ascheablagerung in einem Volumenteilbereich nur noch eine geringe oder keine Verrußung mehr stattfindet.

Da mit steigender Aschebeladung die Aufnahmekapazität für Rußpartikel absinkt, ist es vorteilhaft die Regenerationsdauer und/oder die Zeitintervalle zwischen zwei Regenerationen in Abhängigkeit von der ermittelten Aschebeladung anzupassen bzw. festzulegen.

Speziell kann eine totale Verstopfung durch Ascheablagerung festgestellt werden, wenn in einem der erfassten Volumenteilbereiche des Rußpartikelfilters eine Akkumulation von Ruß nicht mehr stattfindet, also ein zumindest annähernd stabiles Messsignal vorliegt. Insbesondere bei der Erfassung der Beladung in einer Mehrzahl von Bereichen des Rußpartikelfilters kann somit ein Ascheverfüllgrad in Bezug auf das Gesamtvolumen des Rußpartikelfilters ermittelt werden. Somit kann ein Unbrauchbarwerden des Rußpartikelfilters infolge einer überhöhten Aschebeladung rechtzeitig festgestellt werden und eine dementsprechende Warnmeldung ausgegeben werden. Vorteilhaft ist es in diesem Zusammenhang, eine vorausschauende Berechnung über den weiteren Verlauf der Ascheablagerung vorzunehmen und eine Warnmeldung auszugeben, wenn eine vorgebbare verbleibende Restlaufzeit bis zum Unbrauchbarwerden des Rußpartikelfilters unterschritten wird.

Im Falle eines Wall-Flow-Filters kann ein Unbrauchbarwerden auch infolge eines Stopfendurchbruchs auftreten. Damit ist in dem betreffenden Bereich keine Filterwirkung mehr vorhanden. Dies kann mit Vorteil von einem hinter dem Rußpartikelfilter angeordneten separaten Rußsensor festgestellt werden. Dieser Schadensfall kann aber auch erkannt werden, wenn über eine vorgebbare Zeitdauer kein nennenswerter Anstieg der Beladung in einem jeweiligen Bereich mehr erfolgt. Es ist vorgesehen, auch für diesen Schadensfall eine Fehlermeldung auszugeben.

Eine weitere Verbesserung der Zuverlässigkeit bei der Ermittlung des Beladungszustands und beim Betrieb des Rußpartikelfilters wird erreicht, wenn zusätzlich zur erfindungsgemäßen Messanordnung ein Drucksensor bzw. Differenzdrucksensor zur Erfassung des Staudrucks stromauf des Rußpartikelfilters eingesetzt wird. Auf der Basis des enstrechenden Drucksignals wird ebenfalls die Beladung des Partikelfilters charakterisiert. Hierfür können dem Fachmann geläufige Drucksensoren und Signalauswerteverfahren eingesetzt werden, weshalb auf weitere Ausführungen hierzu verzichtet werden kann.

Durch den Drucksensor kann die Zuverlässigkeit und Effizienz des Partikelfilterbetriebs weiter verbessert werden. Vorteilhaft ist es hierfür beispielsweise, die mittels der Impedanzmessaeinrichtung ermittelte Partikelfilterbeladung einer Überprüfung, Plausibilitätskontrolle oder Korrektur anhand des Drucksignals zu unterziehen. Vorteilhaft ist es etwa, durch eine Wechselbeziehung in der Art einer Kreuzkorrelation die aus den Messsignalen der Impedanzmesseinrichtung erhaltenen Werte für die Rußbeladung oder die für den Ablauf der Partikelfilterregeneration maßgebenden Beladungsgrenzwerte gegebenenfalls mit den Drucksignalwerten abzugleichen oder zu korrigieren. Anhand des zusätzlichen Drucksensors ist es ferner möglich, eine Diagnose der Impedanzmesseinrichtung durchzuführen um Störungen oder Defekte festzustellen und gegebenenfalls anzuzeigen.

## Patentansprüche

1. Vorrichtung zur Feststellung des Zustands eines Rußpartikelfilters (13) einer Brennkraftmaschine, mit einer als Rußsensor zur Erfassung einer Rußablagerung ausgebildeten elektrischen Messanordnung umfassend
- ein elektrisches Bauelement mit einer Leiterstruktur zur Erregung eines von der Rußablagerung beeinflussbaren und eine elektrische oder magnetische Kenngröße des Bauelements charakterisierenden elektrischen oder magnetischen Feldes; und
- Messmittel (24) zur Erfassung der elektrischen oder magnetischen Kenngröße des Bauelements als Maß für eine Menge der Rußablagerung,
wobei die Leiterstruktur so angeordnet ist, dass ein Volumenteilbereich des Rußpartikelfilters (13) vom elektrischen Feld durchdrungen ist und der Volumenteilbereich einen Teil des Bauelements bildet,
**dadurch gekennzeichnet, dass**
von den Messmitteln (24) eine mit der elektrischen Impedanz verknüpfte Kenngröße des Bauelements erfassbar ist.

2. Vorrichtung nach Anspruch 1,
**dadurch gekennzeichnet, dass**
eine zweite als Rußsensor (16) zur Erfassung einer Rußablagerung wirksame elektrische Messanordnung vorgesehen ist, die bezüglich der Strömungsrichtung durch den Rußpartikelfilter (13) hinter dem Rußpartikelfilter (13) angeordnet ist.

3. Vorrichtung nach Anspruch 1 oder 2,
**dadurch gekennzeichnet, dass**
die Kapazität und/oder die Induktivität des Bauelements erfassbar ist.

4. Vorrichtung zur Feststellung des Zustands eines Rußpartikelfilters (13) einer Brennkraftmaschine, mit einer als Rußsensor zur Erfassung einer Rußablagerung ausgebildeten elektrischen Messanordnung umfassend
- ein elektrisches Bauelement mit einer Leiterstruktur zur Erregung eines von der Rußablagerung beeinflussbaren und eine elektrische oder magnetische Kenngröße des Bauelements charakterisierenden elektrischen oder magnetischen Feldes; und
- Messmittel (24) zur Erfassung der elektrischen oder magnetischen Kenngröße des Bauelements als Maß für eine Menge der Rußablagerung,
wobei die Leiterstruktur so angeordnet ist, dass ein Volumenteilbereich des Rußpartikelfilters (13) vom elektrischen Feld durchdrungen ist und der Volumenteilbereich einen Teil des Bauelements bildet,
**dadurch gekennzeichnet, dass**
eine zweite als Rußsensor (16) zur Erfassung einer Rußablagerung wirksame elektrische Messanordnung vorgesehen ist, die bezüglich der Strömungsrichtung durch den Rußpartikelfilter (13) hinter dem Rußpartikelfilter (13) angeordnet ist.

5. Vorrichtung nach Anspruch 4,
**dadurch gekennzeichnet, dass**
von den Messmitteln (24) eine mit der elektrischen Impedanz verknüpfte Kenngröße des Bauelements erfassbar ist.

6. Vorrichtung nach Anspruch 4 oder 5,
**dadurch gekennzeichnet, dass**
der ohmsche Widerstand und/oder die Kapazität und/oder die Induktivität des Bauelements erfassbar ist.

7. Vorrichtung nach einem der Ansprüche 1 bis 3, 5 oder 6,
**dadurch gekennzeichnet, dass**
Betrag und/oder Phase der elektrischen Impedanz erfassbar sind.

8. Vorrichtung nach einem der Ansprüche 1 bis 7,
**dadurch gekennzeichnet, dass**
die Rußablagerung in voneinander verschiedenen Volumenteilbereichen des Rußpartikelfilters (13) erfassbar ist.

9. Vorrichtung nach einem der Ansprüche 1 bis 8,
**dadurch gekennzeichnet, dass**
Schaltmittel zur automatischen Einleitung einer Filterregenerierung bei Erreichen eines vorgebbaren Auslösemesswerts vorgesehen sind.

10. Vorrichtung nach einem der Ansprüche 1 bis 9,
**dadurch gekennzeichnet, dass**
Schaltmittel zur automatischen Beendigung der Filterregenerierung bei Erreichen eines vorgebbaren Grenzmesswertes vorgesehen sind.

11. Vorrichtung nach einem der Ansprüche 1 bis 10,
**dadurch gekennzeichnet, dass**
Temperaturmessmittel zur Erfassung der Filtertemperatur und/oder zur Temperaturkompensation des Messsignals vorgesehen sind.

12. Vorrichtung nach einem der Ansprüche 1 bis 11,
**dadurch gekennzeichnet, dass**
eine spulenförmige Leiterstruktur (39) vorgesehen ist.

13. Vorrichtung nach Anspruch 12,
**dadurch gekennzeichnet, dass**
die spulenförmige Leiterstruktur (39) wenigstens teilweise im Inneren des Rußpartikelfilters (13) angeordnet ist.

14. Vorrichtung nach Anspruch 12,
**dadurch gekennzeichnet, dass**
die spulenförmige Leiterstruktur (39) außerhalb des Rußpartikelfilters (13) angeordnet ist.

15. Vorrichtung nach einem der Ansprüche 12 bis 14,
**dadurch gekennzeichnet, dass**
der Rußpartikelfilter (13) eine zylindrische Form aufweist und die Spulenlängsachse der spulenförmigen Leiterstruktur (39) annähernd parallel oder annähernd senkrecht zur Längsachse des Rußpartikelfilters (13) orientiert ist.

16. Vorrichtung nach einem der Ansprüche 12 bis 15,
**dadurch gekennzeichnet, dass**
die Messanordnung eine zweite Leiterstruktur umfasst, wobei die spulenförmige Leiterstruktur (39) mit der zweiten Leiterstruktur in einer Wirkungsverbindung steht und die zweite Leiterstruktur eine von der Rußablagerung (38) beeinflussbare elektrische Kenngröße aufweist, die von den Messmitteln (24) erfassbar ist.

17. Vorrichtung nach Anspruch 16,
**dadurch gekennzeichnet, dass**
die zweite Leiterstruktur als zweite spulenförmige Leiterstruktur (39') ausgebildet ist und von den Messmitteln (24) eine mit der zwischen den spulenförmigen Leiterstrukturen (39, 39') wirksamen Gegeninduktivität korrelierende Größe erfassbar ist.

18. Vorrichtung nach Anspruch 16 oder 17,
**dadurch gekennzeichnet, dass**
die spulenförmige Leiterstruktur (39) in Abgasströmungsrichtung versetzt zur zweiten Leiterstruktur angeordnet ist.

19. Vorrichtung nach einem der Ansprüche 1 bis 11,
**dadurch gekennzeichnet, dass**
die Leiterstruktur ein Elektrodenpaar (20, 21; 22, 23; 25, 26; 27, 28; 29, 30; 31, 32; 31', 32') mit einer ersten Elektrode (20, 22, 25, 27, 29, 31, 31') und einer beabstandet zur ersten Elektrode (20, 22, 25, 27, 29, 31) angeordneten zweiten Elektrode (21, 23, 26, 28, 30, 32, 32') umfasst, wobei der Volumenteilbereich zwischen der ersten Elektrode (20, 22, 25, 27, 29, 31, 31') und der zweiten Elektrode (21, 23, 26, 28, 30, 32, 32') angeordnet ist.

20. Vorrichtung nach Anspruch 19,
**dadurch gekennzeichnet, dass**
die erste Elektrode (20, 22, 29, 31, 31') und die zweite Elektrode (21, 23, 30, 32, 32') flächig ausgebildet sind und als Platten eines Plattenkondensators einander gegenüberliegend angeordnet sind.

21. Vorrichtung nach Anspruch 19 oder 20,
**dadurch gekennzeichnet, dass**
die erste Elektrode (20, 22, 25, 27, 29, 31, 31') und/oder die zweite Elektrode (21, 23, 26, 28, 30, 32, 32') auf der äußeren Oberfläche des Rußpartikelfilters (13) oder mit geringem Abstand zur äußeren Oberfläche des Rußpartikelfilters (13) angeordnet sind,

22. Vorrichtung nach einem der Ansprüche 19 bis 21,
**dadurch gekennzeichnet, dass**
die Messanordnung wenigstens zwei Elektrodenpaare umfasst.

23. Vorrichtung nach Anspruch 22,
**dadurch gekennzeichnet, dass**
das erste Elektrodenpaar in Abgasströmung versetzt zum zweiten Elektrodenpaar angeordnet ist.

## Claims

1. Device for determining the state of a soot particle filter (13) of an internal combustion engine, with an electric measurement arrangement in the form of a soot sensor designed to detect a soot deposit, comprising
- an electric structural element with a conductor structure for the production of an electric or magnetic field that can be influenced by the soot deposit and which characterises an electric or magnetic characteristic magnitude of the structural element; and
- measurement means (24) for the determination of the said electric or magnetic characteristic magnitude of the structural element as the measure for a quantity of the soot deposit,
the conductor structure being arranged so that a partial volume zone of the soot particle filter (13) is penetrated by the electric field and the said partial volume zone forms part of the structural element,
**characterised in that**
a characteristic magnitude of the structural element linked with electrical impedance can be determined by the measurement means (24).

2. Device according to Claim 1,
**characterised in that**
a second electric measurement arrangement that acts as a soot sensor (16) to detect a soot deposit is provided, which is arranged behind the soot particle filter (13) relative to the direction of flow through the soot particle filter (13).

3. Device according to Claims 1 and 2,
**characterised in that**
the capacitance and/or inductance of the structural element can be determined.

4. Device for determining the state of a soot particle filter (13) of an internal combustion engine, with an electric measurement arrangement in the form of a soot sensor designed to detect a soot deposit, comprising
- an electric structural element with a conductor structure for the production of an electric or magnetic field that can be influenced by the soot deposit and which characterises an electric or magnetic characteristic magnitude of the structural element; and
- measurement means (24) for the determination of the said electric or magnetic characteristic magnitude of the structural element as the measure for a quantity of the soot deposit,
the conductor structure being arranged so that a partial volume zone of the soot particle filter (13) is penetrated by the electric field and the said partial volume zone forms part of the structural element,
**characterised in that**
a second electric measurement arrangement that acts as a soot sensor (16) to detect a soot deposit is provided, which is arranged behind the soot particle filter (13) relative to the direction of flow through the soot particle filter (13).

5. Device according to Claim 4,
**characterised in that**
a characteristic magnitude of the structural element linked with electrical impedance can be determined by the measurement means (24).

6. Device according to Claims 4 or 5,
**characterised in that**
the ohmic resistance and/or the capacitance and/or the inductance of the structural element can be determined.

7. Device according to any of Claims 1 to 3, 5 or 6,
**characterised in that**
the size and/or the phase of the electrical impedance can be determined.

8. Device according to any of Claims 1 to 7,
**characterised in that**
the soot deposit can be detected in partial volume zones of the soot particle filter (13) that are different from one another.

9. Device according to any of Claims 1 to 8,
**characterised in that**
switching means are provided for the automatic initiation of a filter regeneration operation when a specifiable triggering measurement value is reached.

10. Device according to any of Claims 1 to 9,
**characterised in that**
switching means are provided for the automatic ending of the filter regeneration operation when a specifiable limiting measurement value is reached.

11. Device according to any of Claims 1 to 10,
**characterised in that**
temperature measurement means are provided for determining the temperature of the filter and/or for the temperature compensation of the measurement signal.

12. Device according to any of Claims 1 to 11,
**characterised in that**
a coil-shaped conductor structure (39) is provided.

13. Device according to Claim 12,
**characterised in that**
the coil-shaped conductor structure (39) is arranged at least partially inside the soot particle filter (13).

14. Device according to Claim 12,
**characterised in that**
the coil-shaped conductor structure (39) is arranged outside the soot particle filter (13).

15. Device according to any of Claims 12 to 14,
**characterised in that**
the soot particle filter (13) is of cylindrical shape and the longitudinal axis of the coil-shaped conductor structure (39) is orientated approximately parallel or approximately perpendicular to the longitudinal axis of the soot particle filter (13).

16. Device according to any of Claims 12 to 15,
**characterised in that**
the measurement arrangement comprises a second conductor structure, such that the coil-shaped conductor structure (39) is in active connection with the said second conductor structure and the second conductor structure has an electric characteristic magnitude that can be influenced by the soot deposit (38), which can be determined by the measurement means (24).

17. Device according to Claim 16,
**characterised in that**
the second conductor structure is made as a second coil-shaped conductor structure (39'), and a magnitude that correlates with the mutual inductance acting between the said coil-shaped conductor structures (39, 39') can be determined by the measurement means (24).

18. Device according to Claims 16 or 17,
**characterised in that**
the coil-shaped conductor structure (39) is arranged offset relative to the second conductor structure in the exhaust gas flow direction.

19. Device according to any of Claims 1 to 11,
**characterised in that**
the conductor structure comprises a pair of electrodes (20, 21; 22, 23; 25, 26; 27, 28; 29, 30; 31, 32; 31', 32') with a first electrode (20, 22, 25, 27, 29, 31, 31') and a second electrode (21, 23, 26, 28, 30, 32, 32') arranged a distance away from the first electrode (20, 22, 25, 27, 29, 31, 31'), such that the partial volume zone is positioned between the first electrode (20, 22, 25, 27, 29, 31, 31') and the second electrode (21, 23, 26, 28, 30, 32, 32').

20. Device according to Claim 19,
**characterised in that**
the first electrode (20, 22, 29, 31, 31') and the second electrode (21, 23, 30, 32, 32') are made flat, and are arranged as plates of a plate condenser opposite one another.

21. Device according to Claims 19 or 20,
**characterised in that**
the first electrode (20, 22, 25, 27, 29, 31, 31') and/or the second electrode (21, 23, 26, 28, 30, 32, 32') are positioned on the outer surface of the soot particle filter (13) or a small distance away from the outer surface of the soot particle filter (13).

22. Device according to any of Claims 19 to 21,
**characterised in that**
the measurement arrangement comprises at least two pairs of electrodes.

23. Device according to Claim 22,
**characterised in that**
the first pair of electrodes is arranged offset relative to the second pair of electrodes in the exhaust gas flow.

## Revendications

1. Dispositif pour constater l'état d'un filtre à particules (13) d'un moteur à combustion, avec un agencement de mesure électrique réalisé comme un capteur de suie pour détecter un dépôt de suie, comprenant :
- un composant électrique avec une structure de conducteur pour exciter un champ électrique ou magnétique susceptible d'être influencé par le dépôt de suie et caractérisant une grandeur spécifique électrique ou magnétique du composant ; et
- des moyens de mesure (24) pour détecter la grandeur spécifique électrique ou magnétique du composant à titre de mesure pour une quantité du dépôt de suie,
dans lequel la structure de conducteur est agencée de telle façon qu'une zone partielle volumétrique du filtre à particules (13) est traversée par le champ électrique et ladite zone partielle volumétrique forme une partie du composant,
**caractérisé en ce qu'**une grandeur spécifique du composant, chaînée avec l'impédance électrique, est susceptible d'être détectée par les moyens de mesure (24).

2. Dispositif selon la revendication 1,
**caractérisé en ce qu'**il est prévu un second agencement de mesure électrique actif à titre de capteur de suie (16) pour détecter un dépôt de suie, cet agencement étant agencé, par référence à la direction d'écoulement à travers le filtre à particules (13), derrière le filtre à particules (13).

3. Dispositif selon la revendication 1 ou 2,
**caractérisé en ce que** la capacité et/ou l'inductance du composant est susceptible d'être détectée.

4. Dispositif pour constater l'état d'un filtre à particules (13) d'un moteur à combustion, avec un agencement de mesure électrique réalisé comme capteur de suie pour détecter un dépôt de suie, comprenant :
- un composant électrique avec une structure de conducteur pour exciter un champ électrique ou magnétique susceptible d'être influencé par le dépôt de suie et caractérisant une grandeur spécifique électrique ou magnétique du composant ; et
- des moyens de mesure (24) pour détecter la grandeur spécifique électrique ou magnétique du composant à titre de mesure pour une quantité du dépôt de suie,
dans lequel la structure de conducteur est agencée de telle manière qu'une zone partielle volumétrique du filtre à particules (13) est traversée par le champ électrique et ladite zone partielle volumétrique forme une partie du composant,
**caractérisé en ce qu'**il est prévu un second agencement de mesure électrique actif à titre de capteur de suie (16) pour détecter un dépôt de suie, cet agencement étant agencé, par référence à la direction d'écoulement à travers le filtre à particules (13), derrière le filtre à particules (13).

5. Dispositif selon la revendication 4,
**caractérisé en ce qu'**une grandeur spécifique du composant, chaînée avec l'impédance électrique, est susceptible d'être détectée par les moyens de mesure (24).

6. Dispositif selon la revendication 4 ou 5,
**caractérisé en ce que** la résistance ohmique et/ou la capacité et/ou l'inductance du composant est susceptible d'être détectée.

7. Dispositif selon l'une des revendications 1 à 3, 5 ou 6,
**caractérisé en ce que** l'amplitude et/ou la phase de l'impédance électrique est susceptible d'être détectée.

8. Dispositif selon l'une des revendications 1 à 7,
**caractérisé en ce que** le dépôt de suie est susceptible d'être détecté dans des zones partielles volumétriques mutuellement différentes du filtre à particules (13).

9. Dispositif selon l'une des revendications 1 à 8,
**caractérisé en ce qu'**il est prévu des moyens de commutation pour démarrer automatiquement une régénération du filtre lorsqu'une valeur de mesure de déclenchement prédéterminée est atteinte.

10. Dispositif selon l'une des revendications 1 à 9,
**caractérisé en ce qu'**il est prévu de moyens de commutation pour terminer automatiquement la régénération du filtre lorsqu'une valeur de mesure limite prédéterminée est atteinte.

11. Dispositif selon l'une des revendications 1 à 10,
**caractérisé en ce qu'**il est prévu des moyens de mesure de température pour détecter la température du filtre et/ou pour la compensation en température du signal de mesure.

12. Dispositif selon l'une des revendications 1 à 11,
**caractérisé en ce qu'**il est prévu une structure de conducteur (39) en forme de bobine.

13. Dispositif selon la revendication 12,
**caractérisé en ce que** la structure de conducteur (39) en forme de bobine est agencée au moins partiellement à l'intérieur du filtre à particules (13).

14. Dispositif selon la revendication 12,
**caractérisé en ce que** la structure de conducteur (39) en forme de bobine est agencée à l'extérieur du filtre à particules (13).

15. Dispositif selon l'une des revendications 12 à 14,
**caractérisé en ce que** le filtre à particules (13) présente une forme cylindrique, et l'axe longitudinal de bobinage de la structure de conducteur (39) en forme de bobine est orienté approximativement parallèlement ou approximativement perpendiculairement à l'axe longitudinal du filtre à particules (13).

16. Dispositif selon l'une des revendications 12 à 15,
**caractérisé en ce que** l'agencement de mesure comprend une seconde structure de conducteur, la structure de conducteur (39) en forme de bobine étant en liaison de coopération avec la seconde structure de conducteur, et la seconde structure de conducteur présente une grandeur spécifique électrique susceptible d'être influencée par le dépôt de suie (38), grandeur spécifique qui est susceptible d'être détectée par les moyens de mesure (24).

17. Dispositif selon la revendication 16,
**caractérisé en ce que** la seconde structure de conducteur est réalisée sous forme d'une seconde structure de conducteur (39') en forme de bobine, et **en ce qu'**une grandeur en corrélation avec la contre-inductance active entre les structures de conducteur (39, 39') en forme de bobine est susceptible d'être détectée par les moyens de mesure (24).

18. Dispositif selon la revendication 16 ou 17,
**caractérisé en ce que** la structure de conducteur (39) en forme de bobine est agencée en décalage dans la direction d'écoulement des gaz d'échappement par rapport à la seconde structure de conducteur.

19. Dispositif selon l'une des revendications 1 à 11,
**caractérisé en ce que** la structure de conducteur comprend une paire d'électrodes (20, 21 ; 22, 23 ; 25, 26 ; 27, 28 ; 29, 30 ; 31, 32 ; 31', 32') avec une première électrode (20, 22, 25, 27, 29, 31, 31') et avec une seconde électrode (21, 23, 26, 28, 30, 32, 32') agencée à distance de la première électrode (20, 22, 25, 27, 29, 31, 31'), la zone partielle volumétrique étant agencée entre la première électrode (20, 22, 25, 27, 29, 31, 31') et la seconde électrode (21, 23, 26, 28, 30, 32, 32').

20. Dispositif selon la revendication 19,
**caractérisé en ce que** la première électrode (20, 22, 25, 27, 29, 31, 31') et la seconde électrode (21, 23, 26, 28, 30, 32, 32') sont réalisées sous forme surfacique et sont agencées comme les plaques d'un condensateur à plaques en superposition les unes au-dessus des autres.

21. Dispositif selon la revendication 19 ou 20,
**caractérisé en ce que** la première électrode (20, 22, 25, 27, 29, 31, 31') et/ou la seconde électrode (21, 23, 26, 28, 30, 32, 32') sont agencées sur la surface extérieure du filtre à particules (13) ou à faible distance de la surface extérieure du filtre à particules (13).

22. Dispositif selon l'une des revendications 19 à 21,
**caractérisé en ce que** l'agencement de mesure comprend au moins deux paires d'électrodes.

23. Dispositif selon la revendication 22,
**caractérisé en ce que** la première paire d'électrodes est agencée en décalage dans la direction d'écoulement par rapport à la seconde paire d'électrodes.
